# EUROPEAN PATENT APPLICATION

(11) **EP 2 264 688 A1**
(43) Date of publication of application: **22.12.2010**
(21) Application number: 09729228.8
(22) Date of filing: 19.01.2009
(51) Int. Cl.: G09F 9/00, G02F 1/133, G09G 3/20, G09G 3/36

(54) **DRIVE CIRCUIT OF DISPLAY UNIT AND DISPLAY UNIT**

(30) Priority: 11.04.2008 JP 2008104019
(71) Applicant: Sharp Kabushiki Kaisha, Osaka-shi, Osaka 545-8522 (JP)
(72) Inventor: NISHIO, Masaaki, Osaka-shi, Osaka 545-8522 (JP); KUMADA, Kouji, Osaka-shi, Osaka 545-8522 (JP)
(74) Representative: Goddar, Heinz J.
(86) International application number: PCT/JP2009/050668
(87) International publication number: WO 2009/125617

(57) **Abstract**

A display device drive circuit (4) includes an AD conversion circuit (45) which carries out AD conversion of an analog signal (Vs), which is inputted via a first terminal (P) connected with data signal lines (SLR, SLG, and SLB). The first terminal (P) is time-divisionally used for (i) a period during which a data signal (Vd) is sent out and for (ii) a period during which the analog signal (Vs) is inputted. The first terminal (P) is (a) connected with the AD conversion circuit (45) via only a switching circuit (47b) and a sample hold circuit, and (b) directly connected with an output circuit (47a). During the period during which the data signal (Vd) is sent out, the switching circuit (47b) disconnects the first terminal (P) from the AD conversion circuit, whereas, during the period during which the analog signal (Vs) is inputted, the switching circuit (47b) electrically connects the first terminal (P) to the AD conversion circuit and an output of the output circuit (47a) becomes high impedance. Accordingly, it is possible to provide a display device drive circuit employing a COG technique capable of carrying out appropriate AD conversion of an analog signal processed in a display panel.

## Description

### Technical Field

The present invention relates to a display device including a photosensor in its display panel.

### Background Art

There has been known a liquid crystal display device including a photosensor in its pixel circuit.

Patent Literature 1 discloses such a display device. Fig. 21 illustrates (i) a configuration of a display region included in the display device and (ii) a circuit block for driving the display region.

A pixel in each display region 10 includes a display pixel 26 and a photosensor pixel 27.

The display pixel 26 is provided at or near each of intersections of source signal lines 23 and gate signal lines 22a, which extend in a column direction and a row direction, respectively. The display pixel 26 includes (i) a TFT 32, (ii) a liquid crystal capacitance defined by a pixel electrode 61, which is provided at an end of the TFT 32, and a common electrode and (iii) a storage capacitor 35 formed between the display pixel 26 and a common signal line 31.

The photosensor pixel 27 includes (i) a TFT 64 serving as a photo diode, (ii) a storage capacitor 63 for storing a pre-charge voltage, (iii) a TFT 62b serving as a source follower, (iv) a TFT 62a serving as a switching element for applying the pre-charge voltage to the storage capacitor 63, and (v) a TFT 62c for selectively supplying, to corresponding one of photosensor output signal lines 25, a source follower output supplied from the TFT 62b. The TFT 62a has (i) a terminal which is connected to corresponding one of pre-charge voltage signal lines 24 and (ii) a gate which is connected to corresponding one of gate signal lines 22c. The TFT 64 (serving as a photosensor element), the TFT 62b, and the storage capacitor 63 each have a terminal which is connected to the common signal line 31. The TFT 64 and the storage capacitor 63 each have another terminal which is connected to a gate of the TFT 62b. The TFT 62c has a gate which is connected to corresponding one of gate signal lines 22b.

The gate signal lines 22a are driven by a gate driver circuit 12a. The gate signal lines 22b and the gate signal lines 22c are driven by a gate driver circuit 12b. The pre-charge voltage signal lines 24 and the photosensor output signal lines 25 are driven by a photosensor processing circuit 18. The source signal lines 23 are driven by a source driver 14.

The TFT 62a applies, to the another terminal of the TFT 64, a pre-charge voltage supplied from the photosensor processing circuit 18 via corresponding one of the pre-charge voltage signal lines 24. The TFT 62a is turned ON upon application of an ON voltage to the gate signal line 22c connected thereto. The pre-charge voltage is a voltage, upon application of which the TFT 62b is turned ON, and which is higher than or equal to a threshold voltage Vth. The TFT 64 causes leakage in response to light irradiation thereon, depending on the intensity of the light. As a result, an electric charge stored in the storage capacitor 63 is discharged through channels of the TFT 64.

In the photosensor pixel 27, the gate of the TFT 62b is pre-charged with a pre-charge voltage by the TFT 62a. That is, the TFT 62b in an initial state has a gate voltage equal to the pre-charge voltage. The gate voltage of the TFT 62a changes as voltages across the storage capacitor 63 change upon light irradiation on the TFT 64. The TFT 62b serves as a source follower circuit. The TFT 62c is turned ON upon application of an ON voltage from the gate driver circuit 12b to the gate signal line 22b connected to the TFT 62b. Here, if the TFT 62b is in an ON state, an electric charge of the photosensor output signal line 25 corresponding thereto is discharged to the common signal line 31 via the TFT 62c and the TFT 62b (or, the photosensor output signal line 25 corresponding thereto would be charged if a level of an electric charge of the common signal line 31 was sufficiently high). A change in an output voltage of the TFT 62b changes an electric charge of the photosensor output signal line 25 connected thereto, thereby changing a potential of the photosensor output signal line 25. In contrast, the electric charge of the photosensor output signal line 25 remains constant while the TFT 62b is in an OFF state, even if the TFT 62c is turned ON.

The photosensor pixel 27 supplies an output voltage to the corresponding one of the photosensor output signal lines 25, via which the output voltage is supplied to the photosensor processing circuit 18. The photosensor processing circuit 18 is provided directly on an array substrate.

### Citation List

### Patent Literatures

Patent Literature 1
   Japanese Patent Application Publication, Tokukai, No. 2006-267967 A (Publication Date: October 5, 2006)
Patent Literature 2
   Japanese Patent Application Publication, Tokukai, No. 2005-327106 A (Publication Date: November 24, 2005)
Patent Literature 3
   Japanese Patent Application Publication, Tokukai, No. 2002-62856 A (Publication Date: February 28, 2002)
Patent Literature 4
   Japanese Patent Application Publication, Tokukaihei, No. 10-91343 A (Publication Date: April 10, 1998)
Patent Literature 5
   Japanese Patent Application Publication, Tokukai, No. 2000-89912 A (Publication Date: March 31, 2000)
Patent Literature 6
   Japanese Patent Application Publication, Tokukai, No. 2005-148285 A (Publication Date: June 9, 2005)
Patent Literature 7
   Japanese Patent Application Publication, Tokukai, No. 2006-133786 A (Publication Date: May 25, 2006)

### Summary of Invention

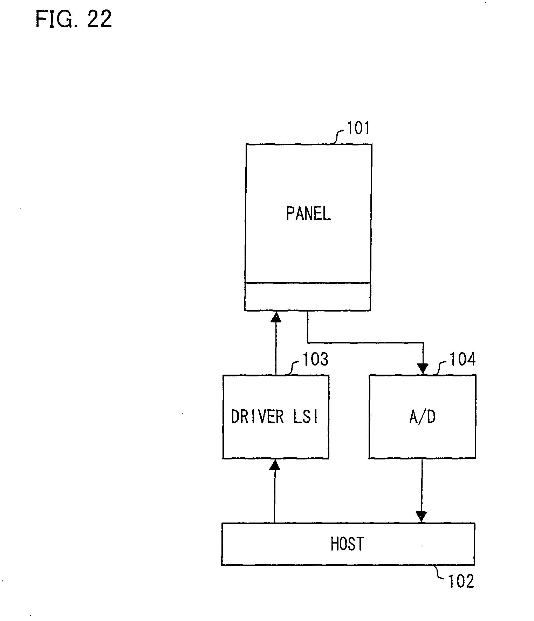

A liquid crystal display device including a conventional photosensor needs to include an AD converter so as to provide an output of the photosensor as digital data to outside. Such a liquid crystal display device includes a host controller 102 and a driver LSI 103 which are provided externally of the display panel 101. Further, the liquid crystal display is configured such that the output of the photosensor is supplied to an AD converter 104, and then the AD converter 104 returns an AD-converted output to the host controller 102 (for example, see Fig. 22). The AD converter 104 is formed of an IC and provided externally of the display panel 101 but not a component of the display panel 101. The display panel 101 here is driven by an analog driver.

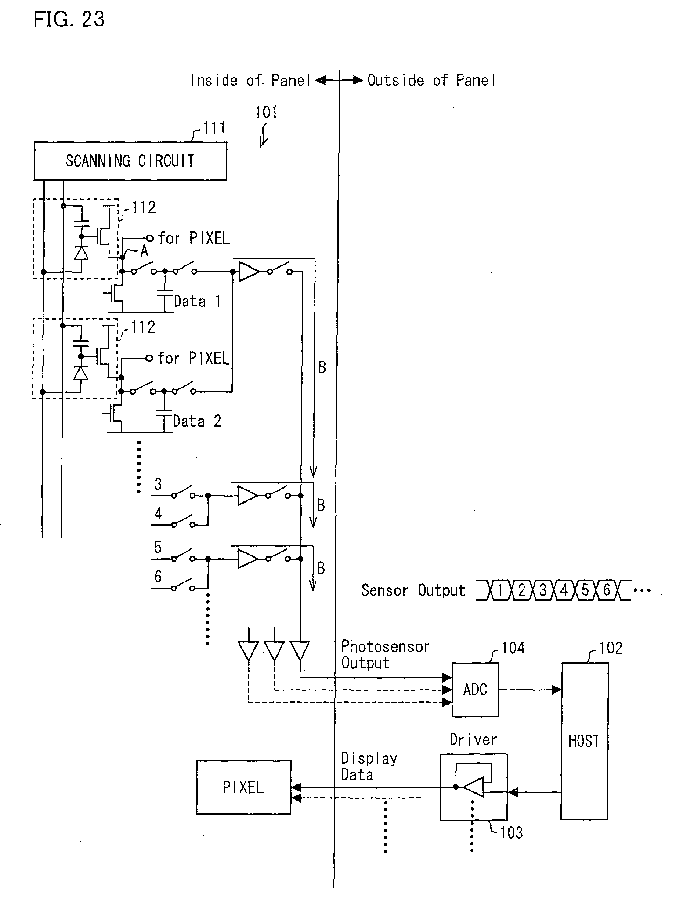

Fig. 23 illustrates a flow, of a signal, involving the AD converter 104 as above.

In the display panel 101, photosensor circuits 112 are driven by a scanning circuit 111. A photosensor output of each of the photosensor circuits 112 is transmitted from a point A, through a path B, to the AD converter 104 provided externally of the display panel 101. The paths B corresponding to the respective photosensor circuits 112 are merged together and connected to the AD converter 104. The photosensor outputs of the respective photosensor circuits 112 are sequentially inputted, as data 1, data 2, data 3, data 4, data 5, data 6, and so on, into the AD converter 104 through the respective paths B in a switched-over manner. The driver LSI 103 supplies display data to pixels.

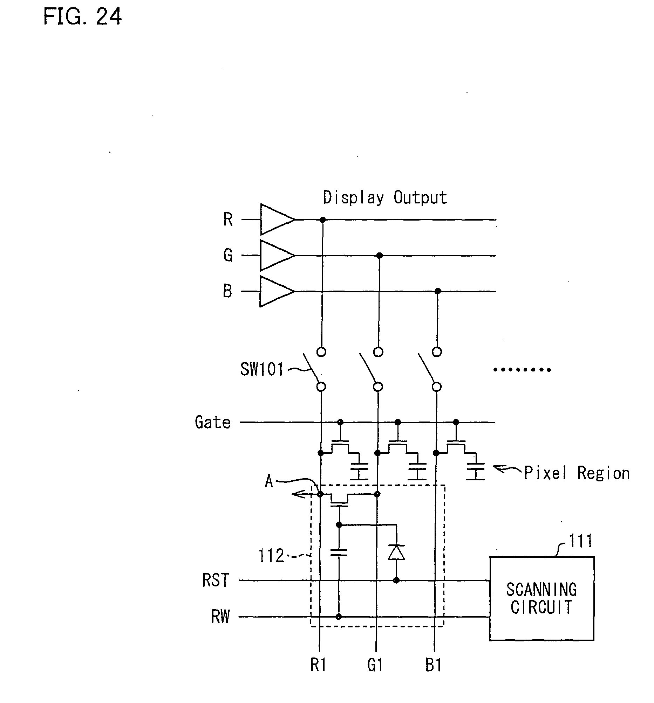

The point A, of each of the photosensor circuits 112, from which the photosensor output is outputted, is connected also to corresponding one of the pixels. Fig. 24 illustrates a configuration of such pixels.

Fig. 24 illustrates a configuration of each of the pixels, which includes a group of R (red), G (green), and B (blue). Each of the R, G, and B is time-divisionally driven every one (1) horizontal scanning period. When a display is carried out, switches SW101 for the R, G, and B, respectively, are sequentially turned ON. On the other hand, in order to operate the photosensor circuits 112, (i) the switches SW101 are opened (OFF), and (ii) the scanning circuit 111 applies predetermined voltages to voltage lines RST and RW so as to make connection between the point A and the AD converter 104.

The above display panel sends out, from its incorporated sensor region, a sensed signal and a sensor voltage which are weak analog data. The analog data as such are highly sensitive to noise, and thus may be destroyed and lose information that they have originally contained. This characteristic of the analog data should be taken into consideration in a case of employing a single-chip driver which includes a data drive circuit and an analog-to-digital conversion circuit, because such a single-chip driver is liable to suffer from stray noise via power supplies, GNDs, or the like. The characteristic should be taken into consideration particularly in a case of employing a COG (Chip On Glass) configuration in which a single-chip of driver LSI is mounted on the display panel.

Fig. 25 illustrates a configuration of Patent Literature 7, which is such that the driver LSI incorporates the AD conversion circuit.

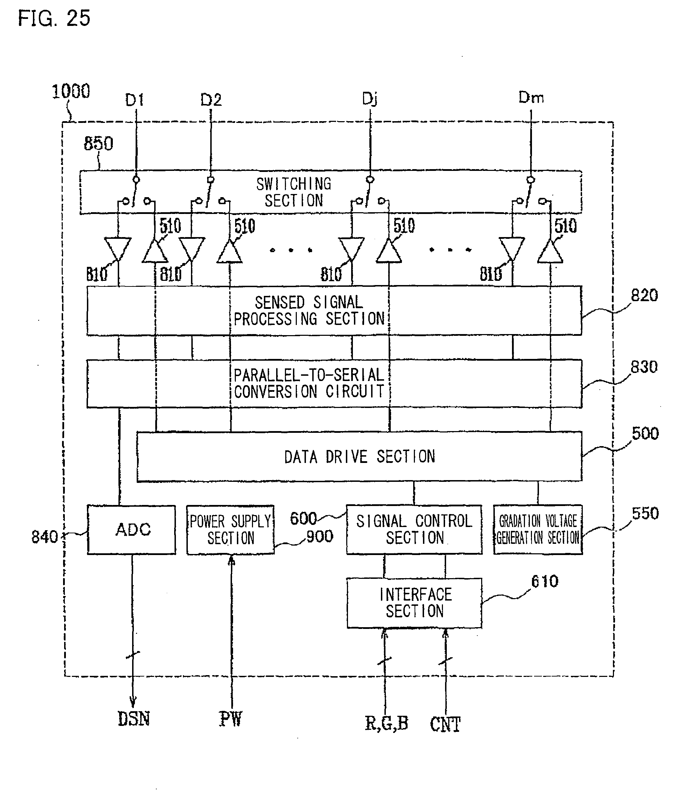

Fig. 25 illustrates a composite IC 1000, which includes a grayscale voltage generation section 550, a data drive section 500, a switching section 850, output buffers 510, amplification sections 810, a sensed signal processing section 820, a parallel-to-serial conversion circuit 830, an analog-to-digital converter (ADC) 840, an interface section 610, a signal control section 600, and a power supply section 900.

The switching section 850 is connected to data signal lines D1 through Dm of a liquid crystal display panel assembly 300, and connects between (i) the data signal lines D1 through Dm and (ii) the output buffers 510 or the amplification sections 810 in accordance with a switching signal SW. The output buffers 510 are connected with the switching section 850, and allow data voltages supplied from the data drive section 500 to be transmitted to the data lines D1 through Dm via the switching section 850. The amplification sections 810 are connected with the switching section 850, and amplify sensed signals which are supplied from the data lines D1 through Dm via the switching section 850.

The sensed signal processing section 820 filters signals (sensed signals) supplied from the amplification sections 810, and carries out a sample and hold process. The parallel-to-serial converter 830 converts the signals (parallel signals) supplied from the sensed signal processing section 820 into a serial signal. The parallel-to-serial converter 830 can include a shift register (not illustrated) for the above conversion. The analog-to-digital converter 840 converts the serial signal (serial sensed signal) supplied from the parallel-to-serial converter 830 into a digital signal DSN, and supplies it to outside. The interface section 610 externally receives video signals R, G, and B and an input control signal CNT, and converts them into signals processable in the signal control section 600 and the like sections. The power supply section 900 supplies power to the composite IC 1000.

According to the technique of Patent Literature 7, inputted sensor data (the sensed signals) are amplified to an appropriate signal level by the amplification sections 810 so that the sensor data become processable. This makes the sensor data less sensitive to noise, and thus contributes to prevention of destruction (change) of the sensor data as originally inputted. However, according to the technique of Patent Literature 7, the sensed sensor data having been amplified by the amplification sections 810 are processed in the form of analog data until the sensor data are converted (analog-to-digital conversion) by the analog-to-digital data converter 840. As a result, power consumption of the amplification sections 810 boosts overall power consumption.

Further, the sensor data are still analog data even after being amplified. That is, the amplified sensor data are still sensitive to noise as compared to digital data. Therefore, the sensor data as originally inputted may be destroyed when they are transmitted through a long processing path.

As described above, the COG (Chip On Glass) technique has been commonly employed in conventional liquid crystal display devices. However, such a COG technique has not been applicable to allow a display panel including a photosensor to have an additional function of carrying out appropriate AD conversion of a photosensor output.

The present invention has been made in view of the problems, and an object of the present invention is to provide (i) a display device drive circuit providing a COG technique capable of carrying out appropriate analog-to-digital conversion of an analog signal such as a photosensor output processed in a display panel, and (ii) a display device.

A display device drive circuit of the present invention is a display device drive circuit including: an analog-to-digital conversion circuit for converting analog signals inputted therein via respective first terminals, the first terminals serving also as output terminals via which data signals are sent out to data signal lines, the first terminals being time-divisionally used for (i) a period during which the data signals are sent out and for (ii) a period during which the analog signals are inputted, each of the first terminals being (a) connected with an input of the analog-to-digital conversion circuit via only a switching circuit and a sample hold circuit and (b) directly connected with an output terminal of a corresponding one of output circuits from which the data signals are sent out to the first terminals, and the switching circuit disconnecting the first terminal from the input of the analog-to-digital conversion circuit during the period during which the data signals are sent out, whereas, the switching circuit electrically connecting the first terminal to the inputs of the analog-to-digital conversion circuit and an output of the output circuit becoming high impedance during the period during which the analog signals are inputted.

According to the above invention, the display device drive circuit includes the analog-to-digital conversion circuit so as to convert, into digital signals, the analog signals inputted via the first terminals. Accordingly, it is possible to solve a problem associated with a configuration where the analog-to-digital conversion circuit is provided externally of the display device drive circuit. That is, it is possible to dramatically reduce the number of wires connecting the display device drive circuit to the analog-to-digital conversion circuit. Conventionally, a display device drive circuit mounted on the display panel by the COG method has included tens of or hundreds of driver outputs and further included the wires connected to the analog-to-digital conversion circuit. In view of this, the present invention makes it possible to solve a problem regarding a large number of wires taking up a large wiring area, and thus makes it possible to reduce a driver mounting area.

Further, the first terminals serve also as the output terminals via which the data signals are sent out to the data signal lines, and are time-divisionally used for (i) the period during which the analog signals are inputted and for (ii) the period during which the data signals are sent out. Accordingly, it is possible to dramatically reduce the number of terminals connected to wires of the display panel.

Furthermore, the first terminals are (i) connected with the respective inputs of the analog-to-digital conversion circuit via only the respective switching circuits and the sample hold circuits and (ii) directly connected with the respective output terminals of the output circuits from which the data signals are sent out to the first terminals. Moreover, the switching circuits disconnect the first terminals from the respective inputs of the analog-to-digital conversion circuit during the period during which the data signals are sent out, whereas, the switching circuits electrically connect the first terminals to the respective inputs of the analog-to-digital conversion circuit and the outputs of the output circuits become high impedance during the period during which the analog signals are inputted. Here, each of the analog signals is transmitted through a very short pathway because the analog signal is supplied to the analog-to-digital conversion circuit via only corresponding one of the first terminals. Accordingly, the analog signals are less sensitive to noise. As such, it is possible to carry out highly accurate analog-to-digital conversion. Further, since the analog signals are first converted into digital signals by the analog-to-digital conversion circuit and then subjected to subsequent processes, the signals are transmitted without receiving a noise effect. In addition, such signals are processed in the form of digital signals, which have amplitude lower than that of the analog signals. Accordingly, it is possible to (i) employ a low-amplitude power supply voltage and thus it is possible to use an element having low withstand voltage, (ii) use a transistor which is smaller in size, and (iii) reduce a line width, for example. Moreover, in a case where many of the circuits are digital transmission circuits, it is unnecessary to reduce, like the analog transmission circuits, impedance of power supply lines and impedance of the circuits themselves. As such, it is possible to miniaturize and downsize the circuits.

Moreover, each of the switching sections serves only as a switch that (i) connects corresponding one of the first terminals to corresponding one of the inputs of the analog-to-digital conversion circuit and (ii) disconnects the first terminal from the input of the analog-to-digital conversion circuit. Furthermore, no resistance component nor capacitance component, such as a switching circuit, is provided between the first terminals and the output circuits. Moreover, each of the output circuits operates in such a manner that (a) it operates only during a period during which the data signals are sent out and (b) its output becomes high impedance during a period during which the analog signals are inputted. Accordingly, the output circuits are less subject to delay, and thus are capable of quickly sending out the data signals. Furthermore, the output circuits themselves do not have to be specifically configured so that they have low output impedance.

As described above, the above invention makes it possible to process, without receiving the noise effect, the sensed signal and sensor voltage, which are made of weak analog data and are supplied from the sensor region of the display panel. Further, the above invention has a configuration highly suitable for a COG technique, which has been desired to employ a chip driver having a smaller area size.

As so far described, the above invention makes it possible to provide a display device drive circuit which provides, to a display panel which processes analog signals such as photosensor outputs, a COG technique capable of carrying out appropriate analog-to-digital conversion of such analog signals.

In order to attain the above object, the display device drive circuit of the present invention is configured such that the first terminals are terminals into which the analog signals are inputted, which analog signals are sensor outputs indicative of light intensity detected by photosensors included in respective display regions of a display panel.

According to the above invention, it is possible to input analog outputs of the photosensors into the display device drive circuit where the analog outputs are converted into digital data.

In order to attain the above object, the display device drive circuit of the present invention is configured such that the analog-to-digital conversion circuit includes an analog-to-digital conversion section for each first terminal.

According to the above invention, the analog-to-digital conversion sections are connected with the respective first terminals. Therefore, each of the analog-to-digital conversion sections only needs to convert, into digital data, corresponding one of the analog signals inputted via corresponding one of the first terminals. That is, it is possible to carry out the analog-to-digital conversion of all the analog signals inputted into the display device drive circuit not time-divisionally but quickly in a parallel manner. As such, the analog-to-digital conversion sections do not need to be formed of fast-operating circuits, and thus there is no need to have a highly-advanced configuration including low impedance, high current capacity, a large-size transistor, and thick wires.

Further, there is no need to carry out a parallel-to-serial conversion of the analog signals before the analog-to-digital conversion, because there are a plurality of analog-to-digital conversion sections.

As such, it is possible to carry out the fast analog-to-digital conversion of the inputted analog signals. In addition, it is possible to reduce cost of the analog-to-digital conversion circuit and also to simplify the configuration of the analog-to-digital conversion circuit.

In order to attain the above object, the display device drive circuit of the present invention is configured such that the analog-to-digital conversion circuit includes a plurality of analog-to-digital conversion sections so that each of the plurality of analog-to-digital conversion sections is shared by corresponding ones of the first terminals, and the switching circuit selectively connects (i) corresponding ones of the first terminals to (ii) an input of corresponding one of the plurality of analog-to-digital conversion sections.

According to the above invention, a plurality of analog-to-digital conversion sections are provided. Therefore, it is possible to carry out the fast analog-to-digital conversion of the inputted analog signals, and to reduce cost of the analog-to-digital conversion circuit and simplify the configuration of the analog-to-digital conversion circuit. Further, since each of the plurality of first terminals is time-divisionally connected to corresponding one of the inputs of the analog-to-digital conversion section via corresponding one of the switching circuits, it is possible to reduce the number of the analog-to-digital conversion circuits and thus possible to simplify the configuration.

In order to attain the above object, the display device drive circuit of the present invention further includes: second terminals which are not for receiving the analog signals but for sending out the data signals to the respective data signal lines.

The above invention attains the following advantage. In a case where there are some data signal lines via which no analog signal is transmitted, the some data signal lines can be connected to the second terminals. As such, it is possible to reduce the number of input circuits, of the display device drive circuit, into which the analog signals are inputted, and thus possible to simplify the configuration.

In order to attain the above object, a display device of the present invention includes the above display device drive circuit.

According to the above invention, it is possible to reduce an area size of a region where the display device drive circuit is mounted, in the display device including the display panel in which the analog signals are processed.

In order to attain the above object, the display device of the present invention is configured such that the display device drive circuit is mounted on a display panel by a COG method.

According to the above invention, it is possible to reduce an area size of a region, in the display device, where the display device drive circuit is mounted by the COG method. The area size of the region where the display device drive circuit is mounted tends to be large, and thus has conventionally been a problem.

In order to attain the above object, the display device of the present invention is configured such that the photosensors are included in the respective display regions of the display panel, and the sensor outputs indicative of the light intensity detected by the photosensors, which sensor outputs are the analog signals, are inputted into the first terminals.

According to the above invention, it is possible to reduce an area size of a region where the display device drive circuit is mounted, in the display device including the display panel in which the analog output of the photosensor is processed.

In order to attain the above object, the display device of the present invention is configured such that the data signal lines are divided into a plurality of groups, each of which includes a plurality of the data signal lines, the data signal lines in one group are time-divisionally and individually connected to corresponding one of the first terminals, and any one of the data signal lines in one group is used for transmitting the sensor outputs to the corresponding one of the first terminals.

According to the above invention, it is possible to dramatically reduce the number of wires to be connected to the display device drive circuit, in the display device in which each of pixel elements of RGB is time-divisionally driven.

In order to attain the above object, the display device of the present invention is configured such that each of the first terminals is connected to corresponding one of the data signal lines, and the corresponding one of the data signal lines is used for transmitting the sensor outputs to corresponding one of the first terminals.

According to the above invention, it is possible to dramatically reduce the number of wires to be connected to the display device drive circuit, in the display device in which the data signal lines are line-sequentially driven.

For a fuller understanding of the nature and advantages of the invention, reference should be made to the ensuing detailed description taken in conjunction with the accompanying drawings.

### Brief Description of Drawings

Fig. 1

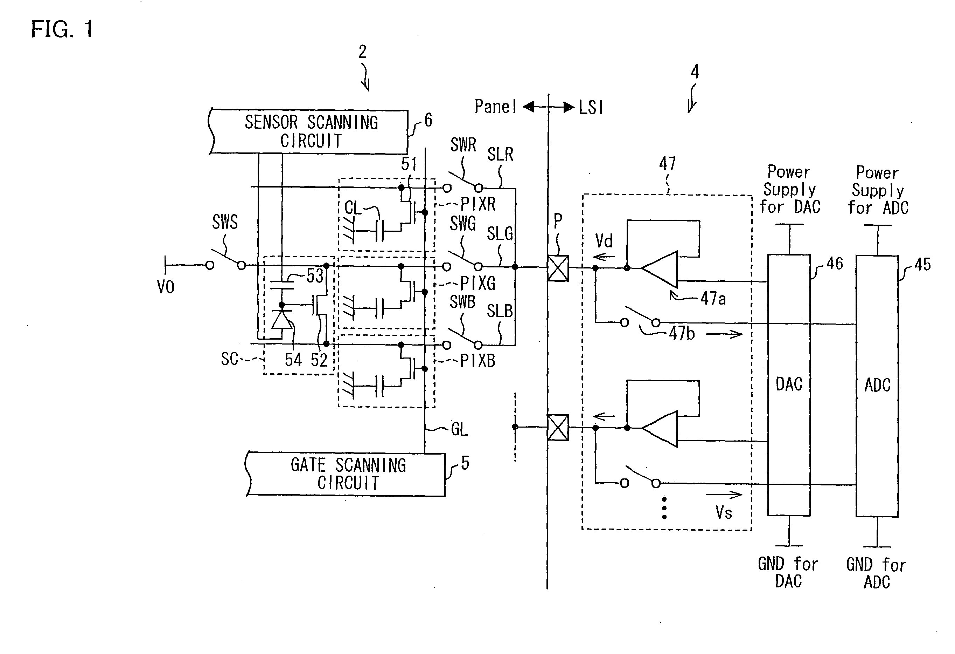

   Fig. 1, showing an embodiment of the present invention, is a circuit diagram illustrating first example of how a data signal line drive circuit and a display region of a display device are connected with each other.
Fig. 2

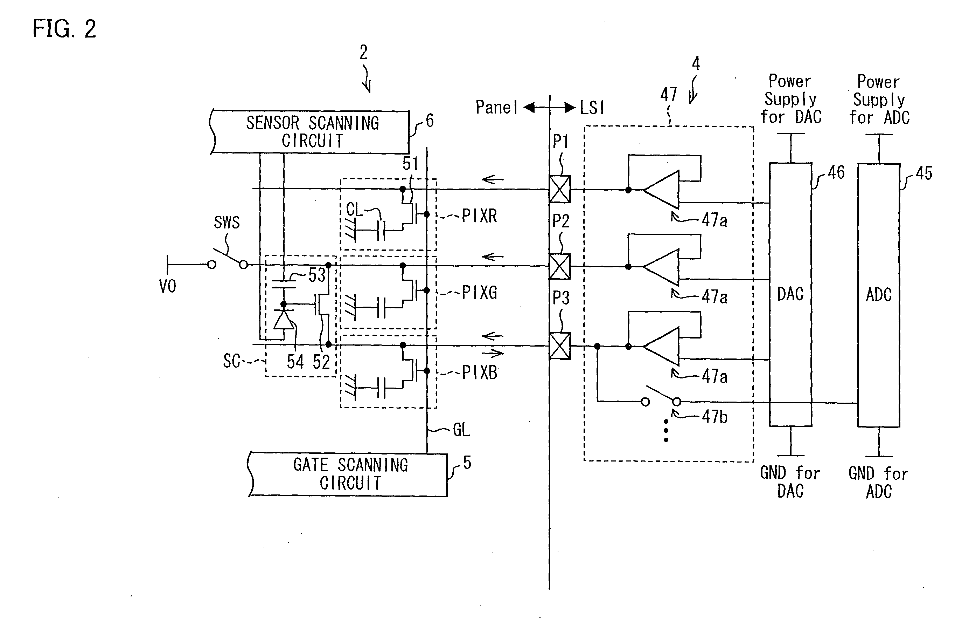

   Fig. 2, showing an embodiment of the present invention, is a circuit diagram illustrating second example of how the data signal line drive circuit and the display region of the display device are connected with each other.
Fig. 3

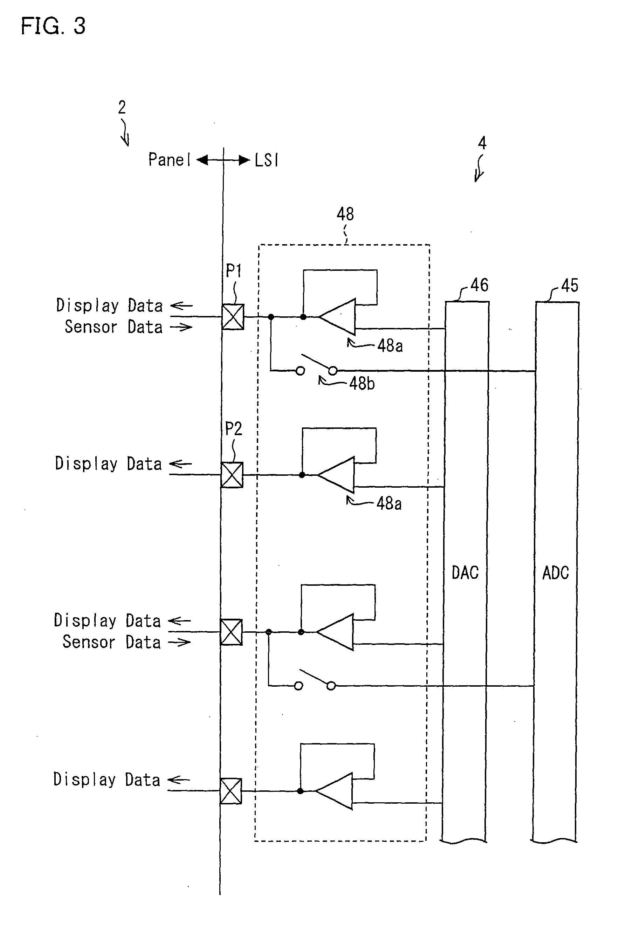

   Fig. 3, showing an embodiment of the present invention, is a circuit diagram illustrating third example of how the data signal line drive circuit and the display region of the display device are connected with each other.
Fig. 4

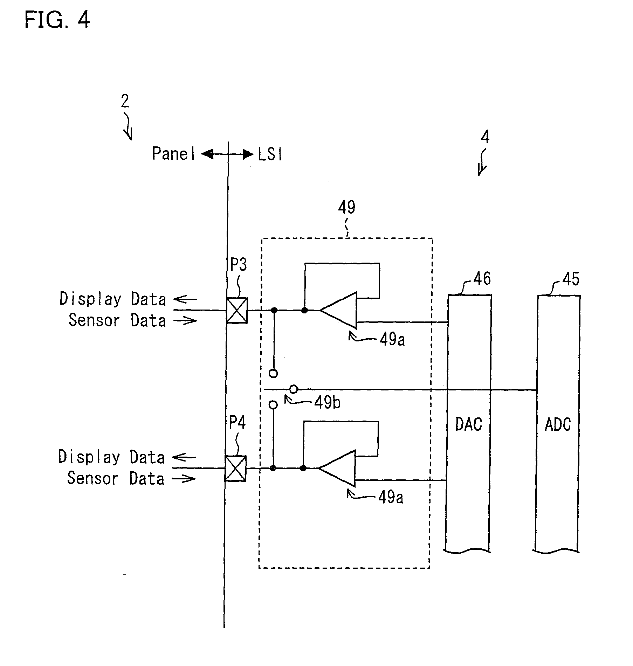

   Fig. 4, showing an embodiment of the present invention, is a circuit diagram illustrating fourth example of how the data signal line drive circuit and the display region of the display device are connected with each other.
Fig. 5

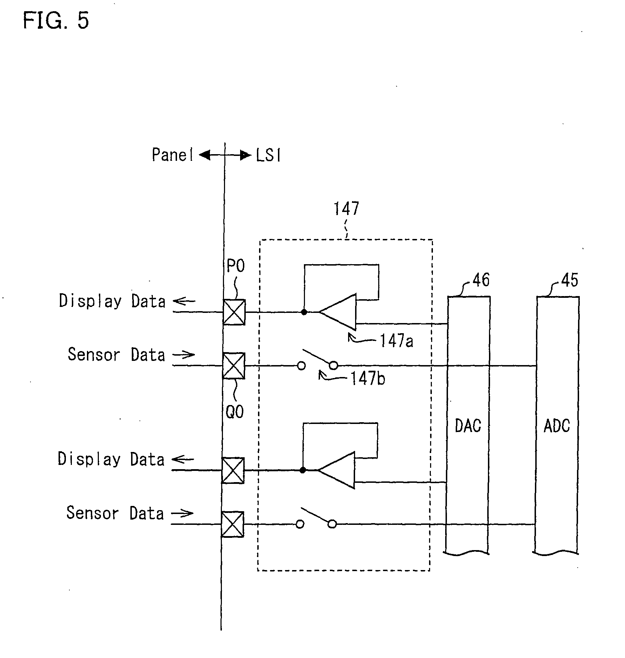

   Fig. 5 is a circuit diagram illustrating a comparative example of how the data signal line drive circuit and the display region of the display device are connected with each other.
Fig. 6

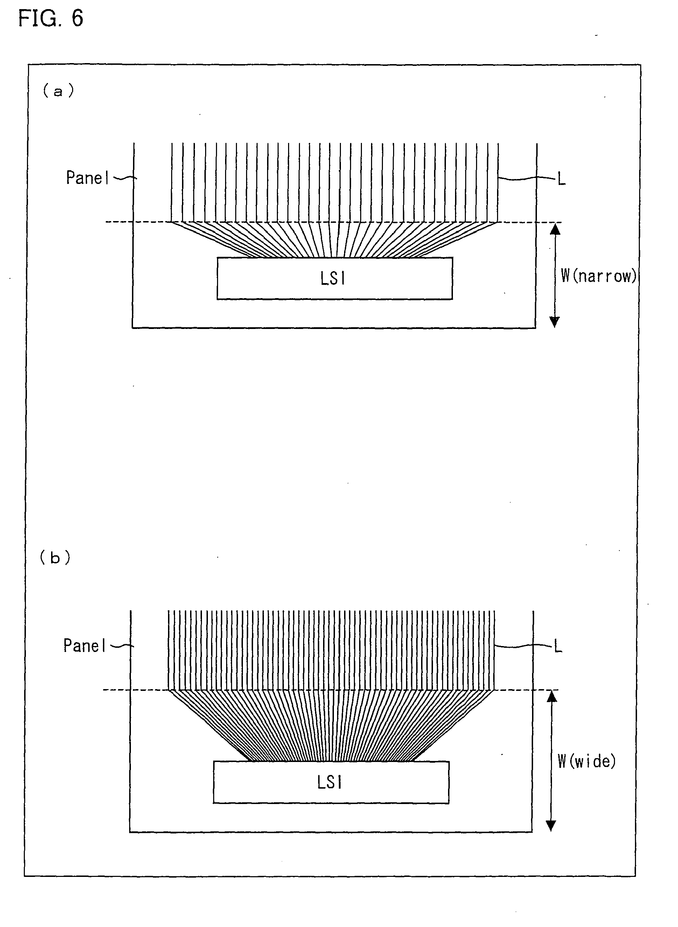

   Fig. 6 is a plan view illustrating relation among the number of wires, a wire density, and a width of a region W where wires are obliquely arranged. (a) of Fig. 6 illustrates the region W having a small width. (b) of Fig. 6 illustrates the region W having a large width.
Fig. 7

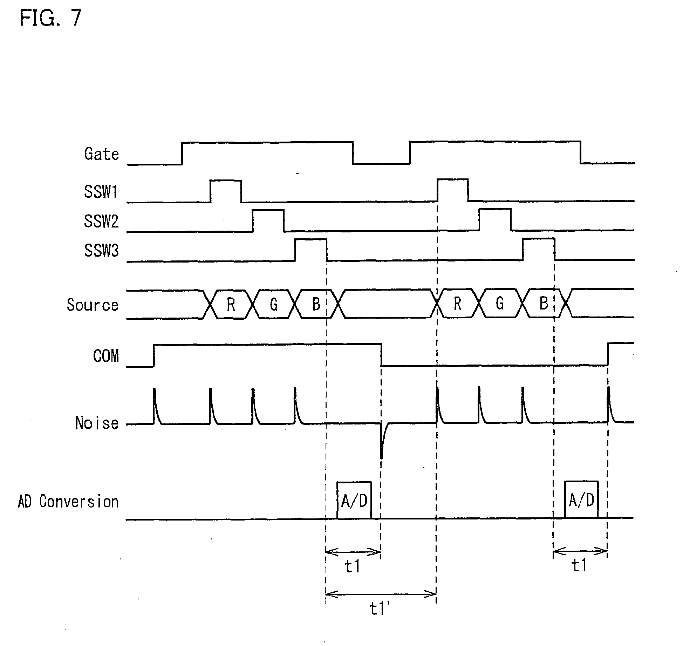

   Fig. 7, showing an embodiment of the present invention, is a first timing diagram illustrating periods during which a data signal line drive circuit carries out AD conversion.
Fig. 8

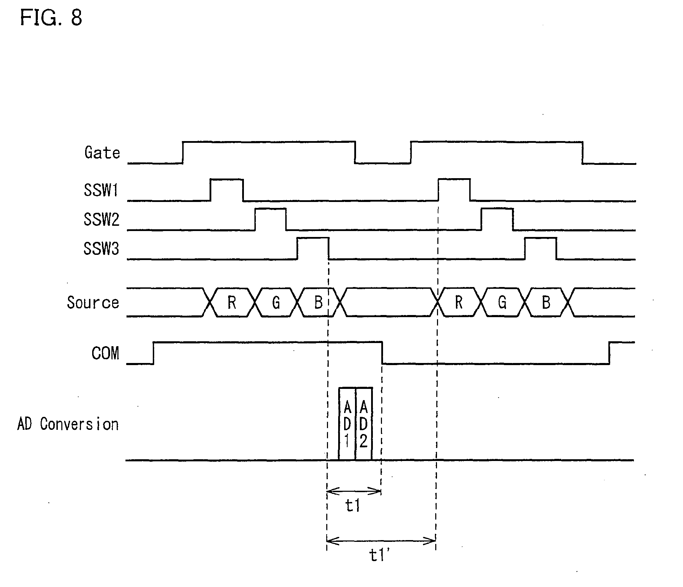

   Fig. 8, showing an embodiment of the present invention, is a second timing diagram illustrating periods during which the data signal line drive circuit carries out AD conversion.
Fig. 9

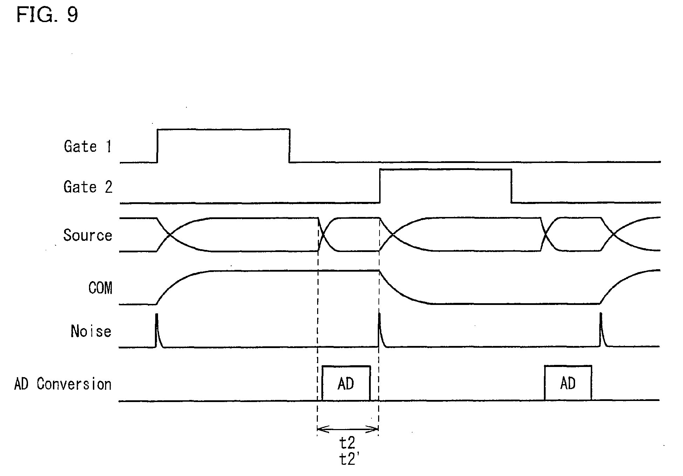

   Fig. 9, showing an embodiment of the present invention, is a third timing diagram illustrating periods during which the data signal line drive circuit carries out AD conversion.
Fig. 10

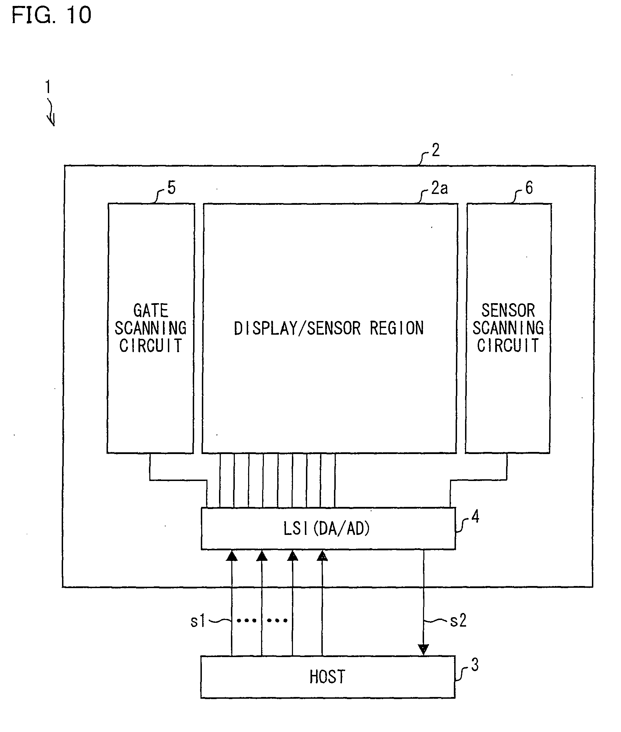

   Fig. 10, showing an embodiment of the present invention, is a block diagram illustrating a configuration of a display device.
Fig. 11

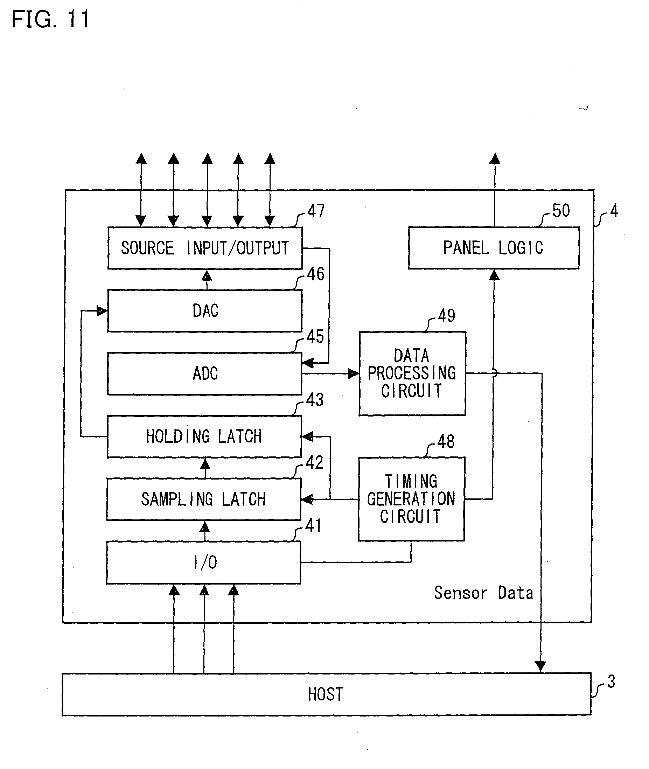

   Fig. 11 is a block diagram illustrating a configuration of a data signal line drive circuit included in the display device of Fig. 10.
Fig. 12

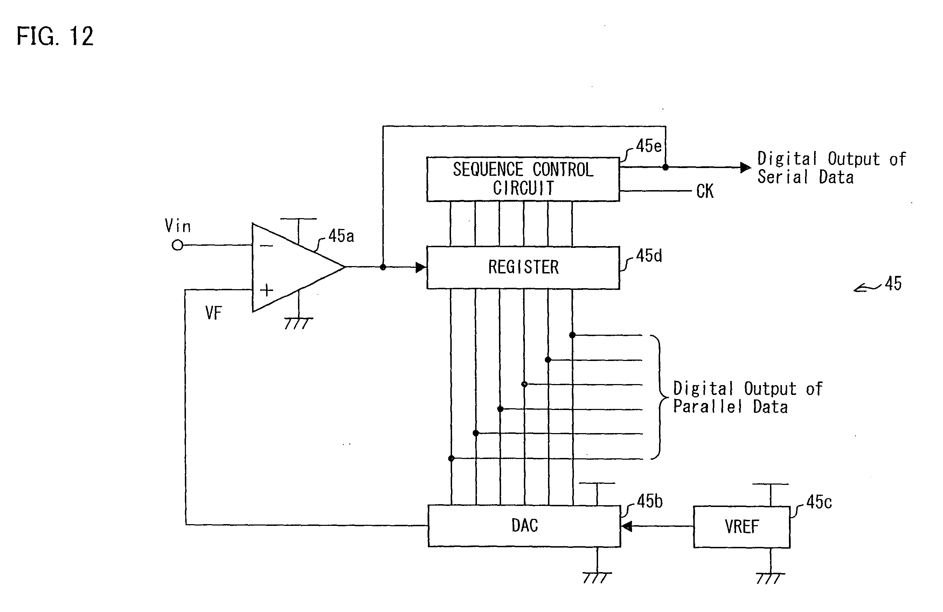

   Fig. 12 is a circuit block diagram illustrating a configuration of an AD conversion circuit included in the data signal line drive circuit of Fig. 11.
Fig. 13

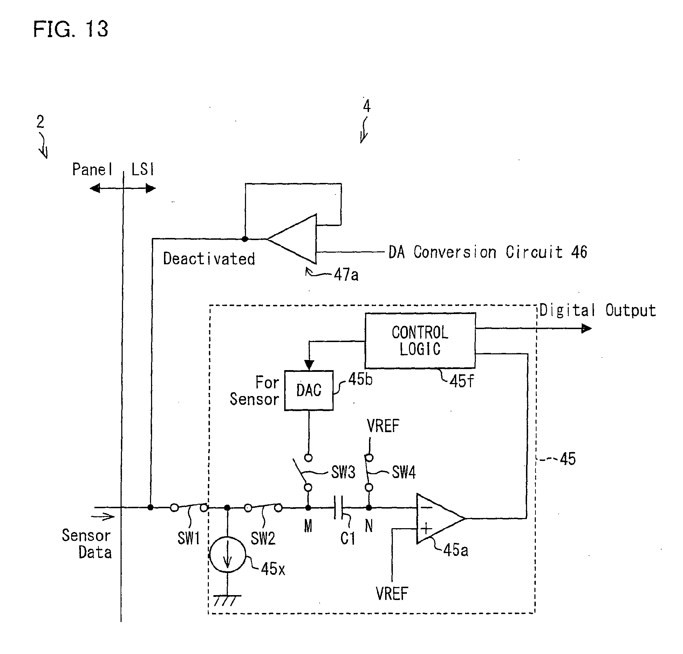

   Fig. 13 is a circuit diagram illustrating how the AD conversion circuit and surrounding members thereof are connected with each other during a period during which a photosensor output is sampled.
Fig. 14

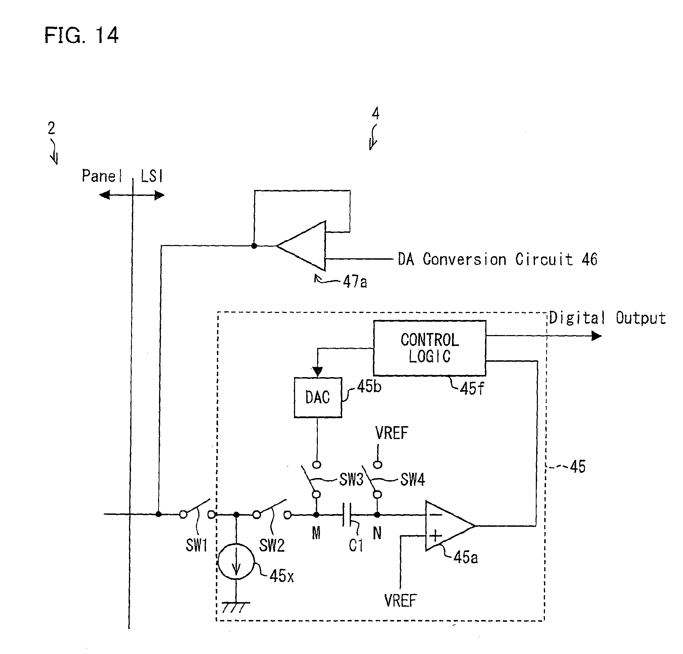

   Fig. 14 is a circuit diagram illustrating how the AD conversion circuit and surrounding members thereof are connected with each other during a period during which the photosensor output is held.
Fig. 15

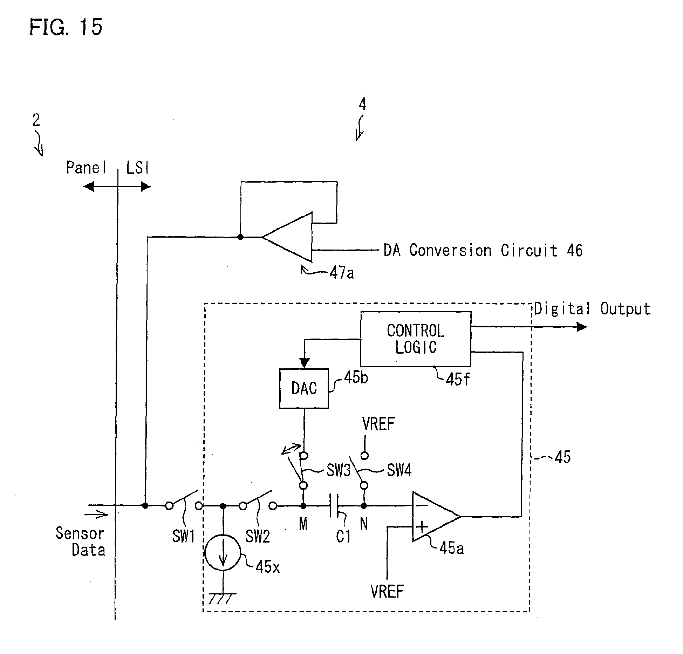

   Fig. 15 is a circuit diagram illustrating how the AD conversion circuit and surrounding members thereof are connected with each other during a period during which the photosensor output is subjected to AD conversion.
Fig. 16

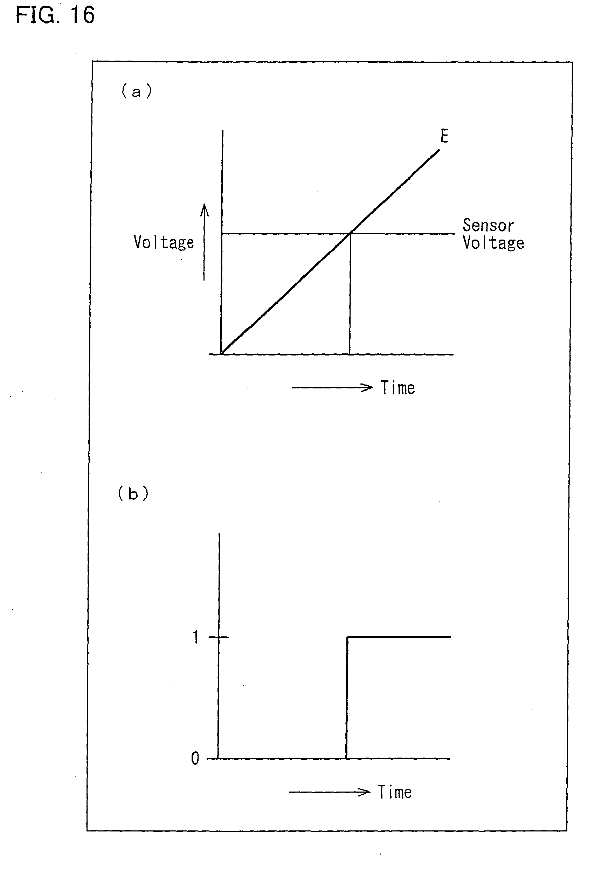

   Fig. 16 shows graphs according to which to describe a configuration of another AD conversion circuit. (a) of Fig. 16 illustrates how a comparator operates. (b) of Fig. 16 illustrates how the comparator defines a digital value.
Fig. 17

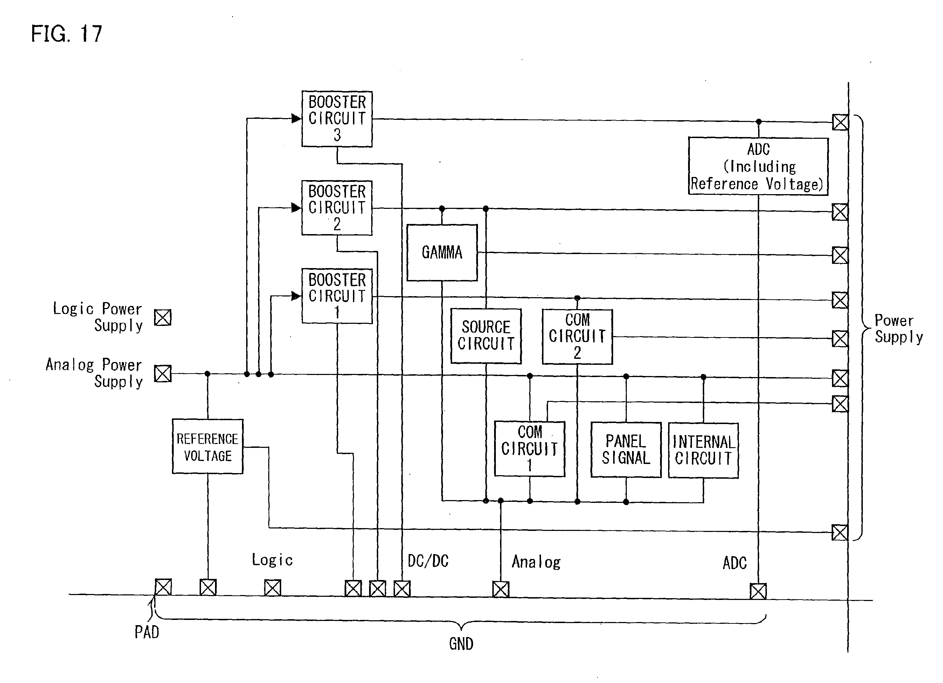

   Fig. 17 is a circuit diagram illustrating that the data signal line drive circuit includes a circuit, in which power supplies and GNDs are provided separately from one another.
Fig. 18

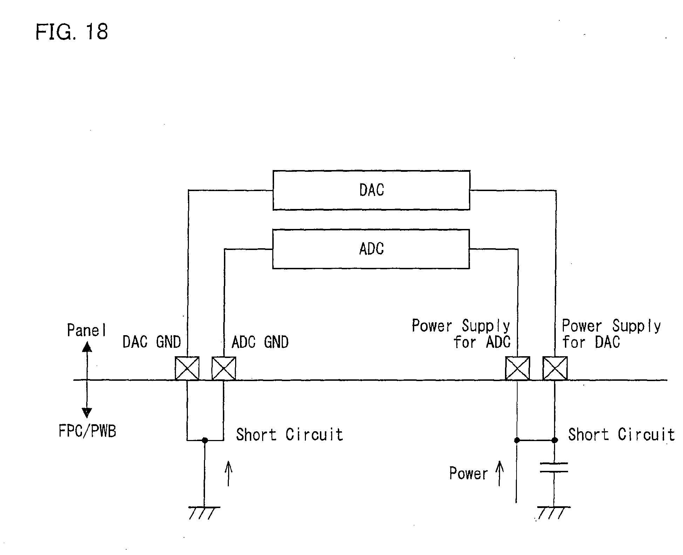

   Fig. 18 is a circuit diagram illustrating that a short-circuit occurs, via outside of the chip, between the power supplies of Fig. 17 and between the GNDs of Fig. 17.
Fig. 19

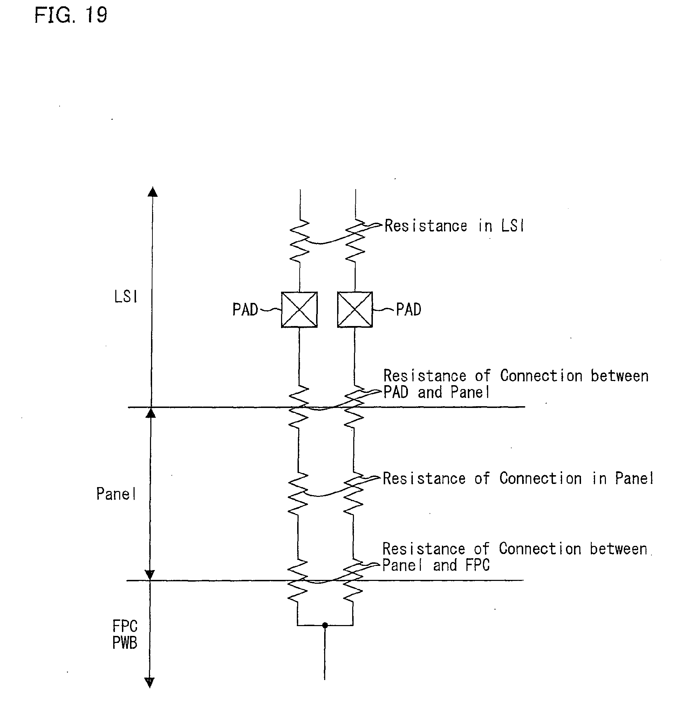

   Fig. 19 is a circuit diagram more specifically illustrating the circuit diagram of Fig. 18.
Fig. 20

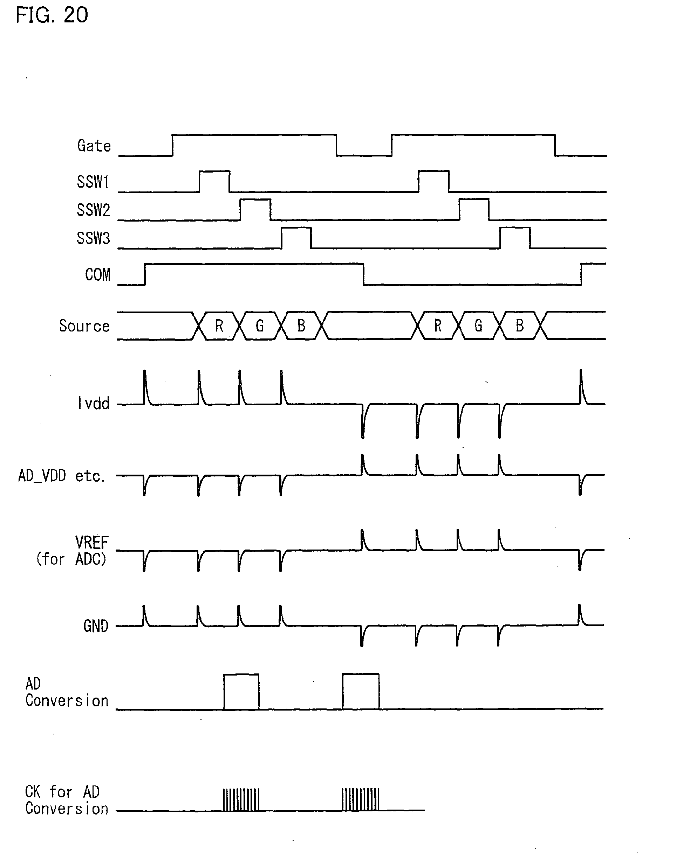

   Fig. 20 is a timing diagram illustrating periods during which the data signal line drive circuit cannot properly carry out AD conversion.
Fig. 21

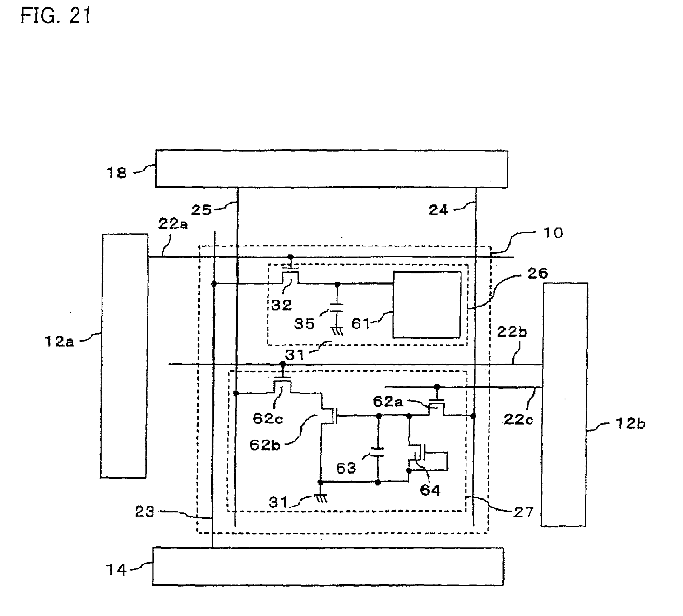

   Fig. 21, showing a conventional art, is a circuit block diagram illustrating a configuration of a display region including a photosensor.
Fig. 22
   Fig. 22, showing a conventional art, is a block diagram illustrating a configuration of a display device in which an analog output of the photosensor is subjected to AD conversion.
Fig. 23
   Fig. 23 is a circuit diagram illustrating how the display region of the display device of Fig. 22 and members provided externally of a display panel are connected with one another.
Fig. 24
   Fig. 24 is a circuit diagram illustrating a configuration of a pixel included in the display region of Fig. 23.
Fig. 25
   Fig. 25, showing a conventional art, is a block diagram illustrating a configuration of a data signal line drive circuit included in a display device.
Fig. 26

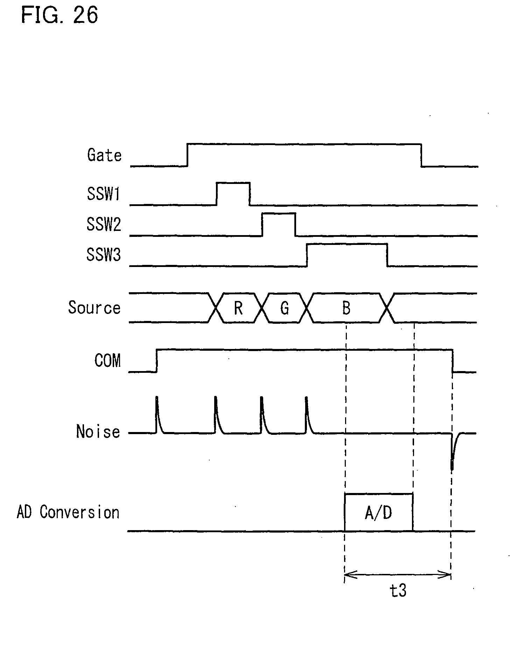

   Fig. 26, showing an embodiment of the present invention, is a fourth timing diagram illustrating periods during which the data signal line drive circuit carries out AD conversion.
Fig. 27

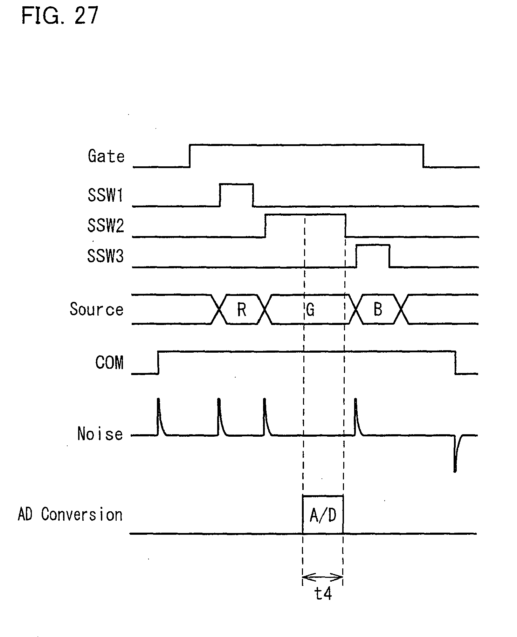

   Fig. 27, showing an embodiment of the present invention, is a fifth timing diagram illustrating periods during which the data signal line drive circuit carries out AD conversion.
Fig. 28

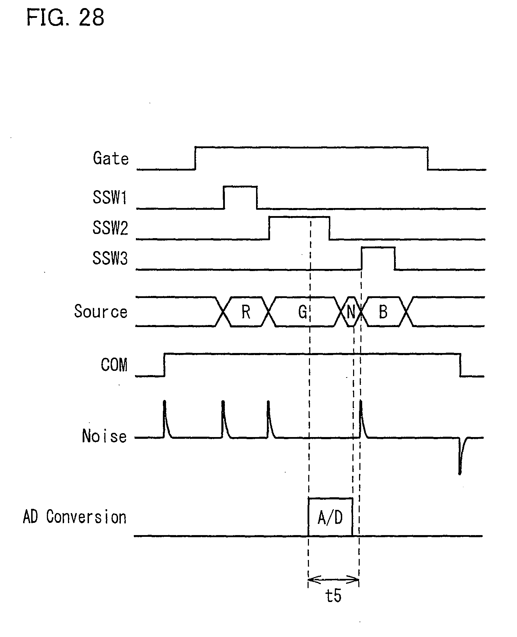

Fig. 28, showing an embodiment of the present invention, is a sixth timing diagram illustrating periods during which the data signal line drive circuit carries out AD conversion.

### Reference Signs List

1 Liquid Crystal Display Device (Display Device)
4 Source Driver (Display Device Drive Circuit)
45 AD Conversion Circuit (Analog-to-Digital Conversion Circuit)
47a, 48a Buffer (Output Circuit)
47b, 48b Switching Section (Switching Circuit)
54 Photodiode (Light Sensor)
SLR, SLG, SLB Data Signal Lines
GL Scanning Signal Line
P Terminal (First Terminal)
P1, P2 Terminals (First Terminal, Second Terminal)
P1, P2, P3 Terminals (Second Terminal, Second Terminal, First Terminal)
P3, P4 Terminal (First Terminal, First Terminal)

### Description of Embodiments

An embodiment of the present invention is described below with reference to Figs. 1 through 20, and Figs. 26 through 28.

Fig. 10 illustrates a configuration of a liquid crystal display device 1 (display device) according to the present embodiment.

The liquid crystal display device 1 is an active matrix display device, and includes a display panel 2 and a host controller 3.

The display panel 2 includes a display/sensor region 2a, a source driver 4 (display device drive circuit, data signal line drive circuit), a gate scanning circuit 5 (scanning signal line drive circuit), and a sensor scanning circuit 6. The display/sensor region 2a is built into a display panel 2 by using, for example, amorphous silicon, polysilicon, CG silicon, or microcrystal silicon. As illustrated in Fig. 1 (described later), the display/sensor region 2a includes pixels and sensor circuits arrayed in matrix. The source driver 4 is made of an LSI chip directly mounted on the display panel 2, and is in a form of so-called COG (Chip On Glass). The source driver 4 supplies, to data signal lines, data signals for pixels in the display/sensor region 2a. The source driver 4 also processes outputs supplied from the sensor circuits. On the other hand, the gate scanning circuit 5 supplies, to scanning signal lines, scanning signals used to write the data signals into the pixels in the display/sensor region 2a. The sensor scanning circuit 6 provides voltages required for the sensor circuits of the display / sensor region 2a.

The host controller 3 is a control board 3 provided externally of the display panel 2. The host controller 3 supplies, to the source driver 4, (i) display data for the source driver 4, (ii) a clock signal and a start pulse etc. which are to be supplied to the gate scanning circuit 5, and (iii) a clock signal, a start pulse, and a supply voltage etc. which are to be supplied to the sensor scanning circuit 6. The above signals and voltages directed to the gate scanning circuit 5 or to the sensor scanning circuit 6 are supplied to the gate scanning circuit 5 or to the sensor scanning circuit 6 via the source driver 4.

Fig. 11 illustrates a configuration of the source driver 4.

The source driver 4 includes an I/O interface circuit 41, a sampling latch circuit 42, a holding latch circuit 43, an AD conversion circuit 45 (analog-to-digital conversion circuit), a DA conversion circuit 46, a source input-output circuit 47, a timing generation circuit 48, a data processing circuit 49, and a panel logic circuit 50.

The I/O interface circuit 41 is a block which receives the various signals and voltages supplied from the host controller 3. According to a timing signal supplied from the timing generation circuit 48, the sampling latch circuit 42 sequentially performs latching of digital display data supplied from the I/O interface circuit 41. The timing generation circuit 48 is a block which extracts various timings from a data transmission signal which has been supplied from the host controller 3 to the I/O interface circuit 41, and generates the timing signal. The holding latch circuit 43 is a block which holds digital display data of one line according to the timing signal supplied from the timing generation circuit 48, the digital display data having been latched by the sampling latch circuit 42. The DA conversion circuit 46 is a block which converts (digital-to-analog conversion) the digital data supplied from the holding latch circuit 43 so as to obtain an analog data signal. The source input-output circuit 47 is a block which buffers the analog data signal supplied from the DA conversion circuit 46 and supplies it to corresponding one of the data signal lines.

Meanwhile, the AD conversion circuit 45 receives, via the data signal lines and the source input-output circuit 47, analog sensor outputs supplied from the sensor circuits in the display/sensor region 2a. Next, the AD conversion circuit 45 samples and holds the analog sensor outputs. Then, the AD conversion circuit 45 converts (analog-to-digital conversion) the held analog sensor outputs into digital data. The data processing circuit 49 is a block which converts the digital data supplied from the AD conversion circuit 45 into a format suited for transmission, and supplies it to the host controller 3. The panel logic circuit 50 is a block which further logically generates, based on the timing signal generated by the timing generation circuit 48, a timing signal to be supplied to the gate scanning circuit 5 and the sensor scanning circuit 6.

Fig. 1 illustrates how the display/sensor region 2a and the source driver 4 are connected with each other.

In the display/sensor region 2a, each of the pixels includes a group of a R (red) picture element PIXR, a G (green) picture element PIXG, and a B (blue) picture element PIXB, and is provided with a sensor circuit SC. In each of the pixels, each of the picture element PIXR, the picture element PIXG, and the picture element PIXB is time-divisionally driven every one (1) horizontal scanning period. The picture element PIXR is provided at each intersection of a scanning signal line GL and a data signal line SLR. The picture element PIXG is provided at each intersection of the scanning signal line GL and a data signal line SLG. The picture element PIXB is provided at each intersection of the scanning signal line GL and a data signal line SLB. Each of the above picture elements includes (i) a TFT 51, which serves as a switching element and (ii) a liquid crystal capacitor CL, and is configured such that the liquid crystal capacitor CL receives a data signal via the TFT 51. The data signal lines SLR, SLG, and SWG in the same group are connected to an identical one of terminals P (first terminals) of the source driver 4 via switches SWR, SLG, and SWB, respectively.

While the terminals P are disposed on one side of the switches SWR, SWG, and SWB, the sensor circuit SC is provided on the other side of the switches SWR, SWG, and SWB, and is connected to the picture elements. Further, the sensor circuit SC includes a TFT 52, a capacitor 53, and a photodiode (photosensor) 54. The TFT 52 has a source terminal and a drain terminal, one of which is connected to the data signal line SLG and the other of which is connected to the data signal line SLB. The capacitor 53 and the photodiode 54 are connected in series with each other to form a series circuit. A connection point between the capacitor 53 and the photodiode 54 is connected to a gate of the TFT 52. The series circuit is connected to the sensor scanning circuit 6 at its both ends. The data signal line SLG connects the corresponding one of the terminals P with a power supply VO via a switch SWS.

In the source driver 4, outputs of the source input/output circuit 47 are connected to the respective terminals P. The source input-output circuit 47 includes a plurality of sets of a buffer (output circuit) 47a and a switching section (switch circuit) 47b. The buffer 47a includes a voltage follower of an operation amplifier. The plurality of sets of the buffer 47a and the switching section 47b are connected to the respective terminals P. The buffer 47a has an input which is connected to an output of the DA conversion circuit 46, and an output which is connected to corresponding one of the terminals P. The switching section 47b switches between (i) connecting an input of the AD conversion circuit 45 to corresponding one of the terminals P and (ii) disconnecting the input of the AD conversion circuit 45 from the terminal P. The AD conversion circuit 45 includes a plurality of AD conversion sections (not illustrated), whose inputs (i.e., the inputs of the AD conversion circuit 45) are connected to the respective terminals P via the respective switching sections 47b. The DA conversion circuit 46 is connected with a power supply exclusively for the DA conversion circuit 46 and is independently grounded. The AD conversion circuit 45 is connected with a power supply exclusively for the AD conversion circuit 45 and is independently grounded.

In a period for performing a display in the display/sensor region 2a, (i.e., in a period during which the buffer 47a supplies the data signal to the terminals P), the buffer 47a is supplied with power, whereas the switching section 47b disconnects the input of the AD conversion circuit 45 from the terminal P. In this way, the display/sensor region 2a receives, in order of time, source outputs (data signals) Vd corresponding to R, G, and B. In the display/sensor region 2a, the switches SWR, SWG, and SWB are switched ON by turns so that the source outputs Vd are sequentially sent to the data signal lines SLR, SLG, and SLB. As such, a display is carried out on each of the picture elements PIXR, PIXG, and PIXB. Meanwhile, the switch SWS is switched OFF.

On the other hand, in a period for detecting light intensity in the display/ sensor region 2a, the switches SWR, SWG, and SWB are switched OFF. Meanwhile, the switch SWS is switched ON so that the data signal line SLG is connected with the power supply VO. Here, the capacitor 53 has been charged in advance to a predetermined voltage via a forward direction of the photo diode 54 from the sensor scanning circuit 6. In this way, a gate of the TFT 52 has a voltage corresponding to intensity of light that the photodiode 54 received, in the period for detecting the light intensity. As such, the data signal line SLB has a voltage corresponding to the detected light intensity. Then, the switch SWB is switched ON so as to connect the data signal line SLB with corresponding one of the terminals P of the source driver 4.

Meanwhile, in the source driver 4, the buffer 47a is cut off from the power supply so that an output of the buffer 47a becomes high impedance. On the other hand, the switching section 47b connects the input of the AD conversion circuit 45 with the terminal P. In this way, a sensor voltage Vs, which is analog outputs of the sensor circuits SC, is inputted into the AD conversion circuit 45. Then, the AD conversion circuit 45 converts the sensor voltage Vs into digital data.

Fig. 2 illustrates another example of how the display/sensor region 2a is connected with the source driver 4.

According to Fig. 2, the data signal lines are line-sequentially driven, unlike the time-division drive of Fig. 1. The picture elements PIXR, PIXG, and PIXB can have colors of R (red), G (green), and B (blue), respectively. Alternatively, the picture elements may have the same colors, or may have colors other than those described above. The data signal lines are connected with respective terminals of the source driver 4 in such a manner that, for example, a data signal line for the picture element PIXR is connected with a terminal P1 (second terminal), a data signal line for the picture element PIXG is connected with a terminal P2 (second terminal), and a data signal line for the picture element PIXB is connected with a terminal P3 (first terminal).

The configuration of Fig. 2 is same as that of Fig. 1 in that one sensor circuit SC corresponds to three picture elements. Therefore, the terminal P3 only is connected with both the buffer 47a and the switching section 47b contained in an output stage of the source input-output circuit 47 as in Fig. 1, whereas the terminals P1 and P2 are each connected with only the buffer 47a. The terminal P3 is connected with a data signal line, to which the pixel element PIXB is connected and via which an output of the sensor circuit SC is transmitted. The number of picture elements corresponding to one sensor circuit SC can be determined as needed.

As is the case with a configuration of Fig. 3, a configuration of Fig. 2 includes (i) first data signal lines each of which is for transmitting both of (a) a data signal indicative of a display image and (b) a sensor output and (ii) second data signal lines each of which is for transmitting only the data signal indicative of the display image. According to Fig. 3, the source driver 4 includes terminals P1 (first terminals) to which the respective second data signal lines are connected, and terminals P2 (second terminals) to which the respective second data signal lines are connected. The number of the terminals P1 and P2 can be determined as needed. Each of the terminals P1 is connected with both of a buffer (output circuit) 48a and a switching section (switching circuit) 48b, which are equivalent to the buffer 47a and the switching section 47b, respectively, contained in an output stage of a source output-input circuit 48. On the other hand, each of the terminals P2 is connected only with the buffer 48a contained in the output stage of the source output-input circuit 48.

The source input-output circuit of the source driver 4 can also be a source input-output circuit 49 as in Fig. 4. The source input-output circuit 49 is configured such that two adjacent ones of the first data signal lines, each of which is for transmitting both (i) the data signal indicative of the display image and (ii) the sensor output, are selectively connected to the AD conversion circuit 45. The source input-output circuit 49 includes (a) terminals P3 and P4 (first terminals) of the source driver 4, each of which is connected with a buffer 49a equivalent to the buffer 47a, and (b) a switching circuit 49b for selectively connecting the terminals P3 and P4 to the AD conversion circuit 45.

According to the configurations of Figs. 1 through 4, it is possible to reduce the number of wires as compared to the configuration of Fig. 5, in which (i) the data signal indicative of the display image and (ii) the sensor output are transmitted via respective different wires. According to Fig. 5, a source driver includes (a) terminals P0, each of which is connected with a data signal line via which the data signal indicative of the display image is transmitted, and (b) terminals Q0, each of which is connected with a wire via which the sensor output is transmitted. Each of the terminals P0 is connected with only a buffer 147a which is made up of a voltage follower of an operational amplifier contained in an output stage of a source input-output circuit 147, whereas each of the terminals Q0 is connected only with a switching circuit 147b, which connects/disconnects the terminal Q0 to/from the AD conversion circuit 45, contained in the output stage of the source input-output circuit 147.

According to the configuration of Fig. 5, a large number of wires (hereinafter referred to as wires L) are provided. Therefore, the wires L need to be densely arranged as in (b) of Fig. 6. In addition, in order to arrange wires which diagonally connect between the source driver LSI and the wires L of the panel without causing a short circuit, a region in which the wires need to be installed diagonally should have a wide width W. In contrast, according to the configurations of Figs. 1 through 4, it is possible to arrange the wires L at sufficient intervals, and thus possible to reduce the width W (see (a) of Fig. 6).

As described above, a conventional configuration, in which the AD conversion circuit is provided externally of the source driver, has involved a problem associated with a number of wires connecting between the AD conversion circuit and the source driver. In contrast, according to the configurations of Figs. 1 through 4, the source driver 4 incorporates the AD conversion circuit 45 so that the source driver 4 carries out AD conversion of analog signals, which are sensor voltages Vs, inputted into the terminals P. Accordingly, it is possible to dramatically reduce the number of wires connecting between the source driver and the AD conversion circuit. As such, it is possible to solve the problem associated with a large number of wires taking up a large wiring area, and thus it is possible to reduce an area size of a region where the display device drive circuit etc. are mounted.

Further, the terminals P serve also as output terminals via which data signals, which are source outputs Vd, are sent out to the data signal lines SLR, SLG, and SLB. In this way, each of the terminals P is time-divisionally used during (i) a period during which the sensor voltages Vs are inputted and (ii) a period during which the source outputs Vd are sent out. As such, it is possible to dramatically reduce the number of terminals which are connected to wires of the display panel 2.

Furthermore, the terminals P are (i) connected with the respective inputs of the AD conversion circuit 45 via only the respective switching sections 47b without amplification circuits etc. therebetween (here, sample hold circuits are not taken into consideration) and (ii) directly connected with an output of the respective buffers 47a which send out the source outputs Vd to the terminals P. The switching sections 47b disconnect the terminals P from the respective inputs of the AD conversion circuit 45 during a period during which the source outputs Vd are sent out, whereas the switching sections 47b electrically connect the terminals P to the respective inputs of the AD conversion circuit 45 and the outputs of the buffers 47a become high impedance during a period during which the sensor voltages Vs are inputted. Here, each of the sensor voltages Vs is transmitted through a very short pathway because the sensor voltage Vs is supplied to the AD conversion circuit 45 via only the switch section 27b from the terminal P. Accordingly, the sensor voltages Vs are less sensitive to noise, and thus possible to carry out highly accurate AD conversion. Further, the sensor voltages Vs are converted into digital signals by the AD conversion circuit 45 so that the sensor voltages Vs are subjected to subsequent processes in the form of the digital signals. This makes it possible not only to transmit the sensor voltages Vs without a noise effect, but also to process the sensor voltages Vs in the form of the digital signals which have a lower amplitude than those of the analog signals. Accordingly, it is possible to (i) employ a low-amplitude power supply voltage and thus it is possible to employ an element having low withstand voltage, (ii) employ a transistor which is smaller in size, and (iii) reduce a line width, for example. In order to process the analog signals, some 5 V or higher voltage may be required if the sensor data is sufficiently large. In contrast, the digital signals can be processed with only a low voltage at for example 1.8 V. Such a small amplitude voltage is advantageous also for prevention of EMI. In addition, in a case where many of the circuits are digital transmission circuits, it is unnecessary to reduce, like analog transmission circuits, the impedance of the power supply lines and the impedance of the circuits themselves so as to prevent quality deterioration of the signals. As such, it is possible to miniaturize and downsize the circuits, unlike a conventional source driver including a lot of analog circuits which are difficult to be downscaled.

Further, the switching section 47b serves only as a switch which (i) connects corresponding one of the terminals P with the input of the AD conversion circuit and (ii) disconnects the terminal P from the input of the AD conversion circuit. Furthermore, no resistance component nor capacitance component, such as a switching circuit, is provided between the terminals P and the buffers 47a. Moreover, the buffer 47a functions just in such a manner that (a) it operates only during a period during which the source outputs Vd are sent out and (b) its output becomes high impedance during a period during which the sensor voltages Vs are inputted. Accordingly, the buffer 47a is less subject to delay, and thus capable of quickly sending out the source outputs Vd. Furthermore, there is no need to configure the output circuits in a special way so that they themselves have low output impedance.

As described above, the present invention makes it possible to perform a noise-free and low-power-consumptive process of the sensed signal and sensor voltage which are made of weak analog data and are supplied from the sensor region of the display panel. Further, the present invention has a configuration highly suitable for a COG technique, which has been desired to employ a chip driver having a smaller area size so as to downsize an area of picture frame for a module.

As so far described, the present invention makes it possible to provide a display device drive circuit which provides, to a display panel which processes analog signals such as photosensor outputs, a COG technique capable of carrying out appropriate analog-to-digital conversion of such analog signals.

Further, according to configurations of Figs. 1 through 3, the AD conversion circuit 45 includes AD conversion sections connected with respective first terminals (terminals P of Fig. 1, terminals P3 of Fig. 2, and terminals P1 of Fig. 3). Accordingly, each of the AD conversion sections only needs to carry out the AD conversion of a sensor voltage Vs inputted from corresponding one of the first terminals. That is, it is possible to carry out the AD conversion of all the sensor voltages Vs inputted into the source driver 4 not time-divisionally but quickly in a parallel manner. Therefore, the AD conversion sections do not need to be formed of fast-operating circuits, and thus there is no need to include highly-advanced configuration including low impedance, high current capacity, a large-size transistor, and thick wires. Further, there is no need to carry out a parallel-to-serial conversion of the sensor voltages Vs before the AD conversion, because there are a plurality of AD conversion sections.

As such, it is possible to carry out the fast AD conversion of the inputted analog signals. In addition, it is possible to reduce cost of the AD conversion circuit and also to simplify the configuration of the AD conversion circuit.

Furthermore, according to the configuration of Fig. 4, the AD conversion sections of the AD conversion circuit 45 are provided in such a manner that one AD conversion section is shared by a plurality of first terminals. For example, each of the AD conversion sections is shared by corresponding one of the terminals P3 and corresponding one of the terminals P4. Further, a switching circuit 49b selectively connects the plurality of first terminals with an input of corresponding one of the AD conversion sections. Generally, the number of first terminals which share one AD conversion section can be any number. Since the plurality of AD conversion sections are provided as above, it is possible to carry out the fast AD conversion of the inputted sensor voltages Vs, and to reduce cost of the AD conversion circuit and simplify the configuration of the AD conversion circuit. Further, since each of a plurality of first terminals is time-divisionally connected to the input of corresponding one of the AD conversion sections via the switching circuit 49b, it is possible to reduce the number of the AD conversion sections and thus possible to simplify the configuration. This contributes to downsizing of an area of picture frame and cost reduction for the liquid crystal display device 1, because the area size of the source driver 4, the area size of the chip, an area size of region where the display device drive circuit is mounted, and the like are reduced.

Fig. 12 illustrates a configuration of the AD conversion circuit 45.

The AD conversion circuit 45 includes a comparator 45a, a DA converter 45b, a reference voltage generator 45c, a register 45d, and a sequence control circuit 45e. The comparator 45a receives the sensor voltage Vs which serves as an input voltage Vin. The comparator 45a further receives a voltage, which serves as a comparative voltage VF and is supplied from the DA converter 45b. The voltage is generated in such a manner that the DA converter 45b converts (digital-to-analog conversion) a register value of the register 45d with use of a reference voltage VREF generated by the reference voltage generator 45c. The register 45d makes a change to the register value according to an output from the comparator 45a. The sequence control circuit 45a converts the register value of the register 45d into serial data according to timing indicated by a clock input signal CK, and then outputs the serial data.

For example, the register 45d is set such that (i) an initial value of a most significant bit is 1 and (ii) initial values of the other bits are 0. The comparator 45a carries out a comparison between each of the input voltages Vin and the comparative voltage VF at every timing indicated by the clock input signal CK. The comparator 45a then outputs Low when the input voltage Vin is greater than the comparative voltage VF, and outputs High when the input voltage Vin is less than the comparative voltage VF. The register 45d holds the register value constant when Low is supplied from the comparator 45a, and changes the most significant bit of the register value to 0 when High is supplied from the comparator 45a. Here, the register 45d changes also a second significant bit of the register value to 1. The register value thus held or thus changed is converted (digital-to-analog conversion) by the DA converter 45b so as to obtain a new comparative voltage VF. The new comparative voltage VF is inputted into the comparator 45a while the register 45d determines a next bit in a same way as above. The process as above is repeated so that bits are sequentially determined from the most significant bit to the least significant bit. As described above, it is possible for the register 45d to digitally output all bits in a form of parallel data, and for the sequence control circuit 45e to digitally output the bits in a form of serial data. The sequence control circuit 45e feedbacks its output to an input terminal of the register 45d so that the sequence control circuit 45e stably outputs data.

Meanwhile, as illustrated in Fig. 17, an LSI chip generally includes power supplies and GNDs of various circuits. Each of such power supplies and GNDs is independently provided for corresponding one of the circuits in the LSI chip. However, the power supplies short-circuit one another and the GNDs short-circuit one another, on a substrate on which the LSI chip is mounted (see Fig. 18). More specifically, as illustrated in Fig. 19, the power supplies and the GNDs short-circuit one another via wire resistances. That is, (i) the power supplies for an identical circuit make effect on one another via a common impedance and (ii) the GNDs for an identical circuit make effect on one another via a common impedance, depending on amplitude of an electrical current passing through the circuits.

In a case of the display device, the power supplies and the GNDs, each of which is independently provided for corresponding one of the circuits in the source driver, are connected with one another via an identical wire on a substrate when, for example, the source driver is mounted on an FPC (flexible print circuit) or on a PWB (print wiring board). When an electrical current passes through one circuit in the above source driver, the electrical current flows from the power supply and the GND in the one circuit. Accordingly, an electrical current equivalent to the above electrical current is transmitted to the power supplies and the GNDs on the FPC or on the PWB. As a result, a voltage drop due to wire resistances occurs in these power supplies and the GNDs on the FPC or on the PWB to which the electrical current is transmitted. If this is the case, the other circuits in the source driver on the FPC or on the PWB are operated with the power supplies and the GNDs in which the voltage drop is caused. As a result, the other circuits come under influence of the one circuit.

The source driver 4, of the liquid crystal display 1, which is mounted by COG, is connected with power supplies and GNDs which are provided outside the chip and on the display panel 2. Therefore, the wire resistances are extremely high, and thus the voltage drop due to the common impedance makes serious effect on the source driver 4. The details are as follows. When switches SSW1, SSW2, and SSW3 (corresponding to SWR, SWG, and SWB of Fig. 1, respectively) sequentially connect data signal lines of R, G, and B to the source driver, control pulses sequentially rise. Meanwhile, Meanwhile, in a case where a common electrode COM receives a voltage being driven, a voltage of the common electrode COM changes. A large electrical current Ivdd is observed at power supplies and GNDs of the above switches and of the common electrode COM at timings of rising edges of the control pulses and at timings at which the voltage changes (see Fig. 20).

In a case of a display device employing a dot-sequential drive, which is performed per a predetermined number of data signal lines (e.g., three data signal lines R, G, and B (see Fig. 20), or performed wholly with respect to all data signal lines), the data signal lines are charged so that they each have a polarity opposite to a previous polarity. The charging is carried out at timings of rising edges of control pulses of the switches (SSW1, SSW2, and SSW3, which connect the outputs of the source driver 4 to the data signal lines). Here, an inrush current occurs at the above timings due to the charging. On the other hand, in a case of a display device employing a line-sequential drive which is such that the data signal lines receive data line-sequentially, the data signal lines are charged so that they each have a polarity opposite to a previous polarity every time the source driver 4 starts sending data for reversing the polarity. Here, the inrush current occurs every time the source driver 4 starts sending the data. Further, in the case where the common electrode COM receives the voltage being driven, the common electrode COM is charged so that it has a polarity opposite to a previous polarity. Here, due to the charging, the inrush current occurs at timings at which the voltage of the common electrode COM changes. These inrush currents make an effect on the electrical current Ivdd flowing in the power supplies and the GNDs.

Accordingly, (i) a power supply voltage AD-VDD of the AD conversion circuit, (ii) a reference voltage VREF which is generated by using the power supply voltage, and (iii) voltages of the GNDs etc. change at timings at which the electric current Ivdd occurs. Under the circumstances, if the AD conversion is carried out at the timings at which the voltages change, that is, if the AD conversion is carried out by using voltages having noises superimposed thereon, then the AD conversion may be abnormally carried out.

In view of the above problem, the present embodiment is configured such that the AD conversion is carried out by the AD conversion circuit 45 during a first period, during which the large electric current Ivdd does not occur. In the present embodiment, the source driver 4 receives each of the source output and the sensor output time-divisionally via an identical terminal. This means that sampling for the AD conversion is carried out during a period during which the source driver 4 receives the sensor output. Note however that the sampling and the AD conversion do not necessarily have to be carried out sequentially without interruption between them, and therefore may be carried out sequentially with interruption between them. That is, it may be arranged such that, once the sampling has been carried out, the AD conversion is carried out during a period other than the period during which the source driver 4 receives the sensor output.

Specifically, in a case of a display device employing the dot-sequential drive, which is performed per a predetermined number of the data signal lines (e.g., the three data signal lines R, G, and B, see Fig. 7), the AD conversion is carried out at a timing which overlaps neither (i) the timings of the rising of the control pulses of the switches SSW1, SSW2, and SSW3 (which correspond to the switches SWR, SWG, and SWB in Fig. 1 and sequentially connect the data signal lines R, G, and B to the source driver) nor (ii) the timings at which the voltage of the common electrode COM changes in the case where the common electrode COM receives the voltage being driven (i.e., in a case where a voltage being AC-driven is applied to the common electrode COM). The above timings are defined as timings of rising of waveforms, which are obtained when the circuits output the above signals. This definition applies also to the following embodiments. More specifically, according to Fig. 7, the AD conversion is carried out during the first period falling within a period t1. The period t1 is from (i) a time point at which all output of the source outputs to the data signal lines is completed for one scanning signal line selection period during which corresponding one of the scanning signal lines is in a selected state to (ii) a time point at which the voltage of the common electrode COM changes for a first time since the time point (i). The period t1 is the maximum time length that the first period can take. Here, the first period can start at any time as long as it starts after the switches, which are last to send data signals to the data signal lines (e.g., SSW3 in Fig. 7), are turned OFF.

As described above, according to Fig. 7, the AD conversion is carried out during a period which does not overlap a period during which the data signal lines receive the data signals. In this way, the AD conversion is carried out during a period which does not overlap the timings of the rising edges of the control pulses of the switches SSW1, SSW2, and SSW3.

It is not necessary to take into consideration the voltage of the common electrode COM in a case where the common electrode COM does not receive the voltage being driven, i.e., in a case where a voltage being driven so as to keep constant is applied to the common electrode COM. In this case, the first period can be any period as long as it falls within a period t1'. The period t1' is for example from (i) a time point at which all output of the source outputs to the data signal lines is completed for one scanning signal line selection period to (ii) a time point at which output of the source outputs to the data signal lines is initiated for a subsequent scanning signal line selection period. The time point (ii) at which transmission of the source outputs to the data signal lines is initiated for one scanning signal line selection period is generally after a time point at which the voltage of the common electrode COM changes for this scanning signal line selection period.

As described above, the AD conversion is carried out during the first period. In this way, it is possible to carry out the AD conversion during a period which does not overlap timings at which noise occurs (see Fig. 7). As such, the AD conversion can convert the sensor outputs accurately.

The AD conversion according to Fig. 7 can apply also to a display device employing the dot-sequential drive which is such that all the data signal lines are dot-sequentially driven.

The AD conversion can be carried out in a manner illustrated in Fig. 8, besides the AD conversion as above.

The AD conversion according to Fig. 8 is same as that of Fig. 7 in terms of the periods t1 and t1', during which the AD conversion can be carried out. Note however that the AD conversion of Fig. 8 is different from that of Fig. 7 in that two types of AD conversions are carried out during the period t1 or t1'. The two types of the AD conversions are carried out in such a manner that each of sensor outputs from two different pixels is sequentially and time-divisionally inputted into an identical AD conversion input section. Such an AD conversion can be attained by modifying the configuration of Fig. 1 so that the switching section 47b is a double-throw switch, which is capable of selectively establishing (i) the AD conversion input path of a corresponding pixel and (ii) an AD conversion input path of a neighboring pixel. In such a configuration, a switching section 47b, which is connected to a terminal P corresponding to the neighboring pixel, is omitted.

Further, the AD conversion can be carried out in a manner illustrated in Fig. 9, besides the AD conversion as above.

The AD conversion of Fig. 9 is carried out in a display device employing the line-sequential drive, which is such that the data signal lines receive same data signals during one (1) horizontal scanning period. This is different from the AD conversion which is carried out in such a manner that each of the data signals of RGB is time-divisionally supplied during one (1) horizontal scanning period. Such an AD conversion of Fig. 3 is carried out during a period overlapping neither (i) a period during which data signals are sent out to the data signal lines nor (ii) a timing at which the voltage of the common electrode COM changes in the case where the common electrode COM receives the voltage being driven.

According to Fig. 9, the AD conversion is carried out during a first period, which falls within a period t2. The period t2 is from (i) a time point at which all output of the source outputs to the data signal lines is completed for one scanning signal line selection period to (ii) a time point at which the voltage of the common electrode COM changes. The period t2 is the maximum time length that the first period can take.

It is not necessary to take into consideration the voltage of the common electrode COM in the case where the common electrode COM does not receive the voltage being driven, i.e., in the case where the voltage being driven so as to keep constant is applied to the common electrode COM. In this case, the first period can be any period as long as it falls within a period t2'. The period t2' is for example from (i) a time point at which all output of RGB the source outputs to the respective data signal lines is completed for one scanning signal line selection period to (ii) a time point at which output of the source outputs of RGB to the respective data signal lines is initiated for a subsequent scanning signal line selection period. Fig. 9 illustrates an exemplary case where the period t2' and the period 2t completely overlap each other. Note however that the time point (ii) at which transmission of the source outputs of RGB to the respective data signal lines is initiated for a subsequent scanning signal line selection period is generally after a time point at which the voltage of the common electrode COM changes for this scanning signal line selection period.

Figs. 26 through 28 each illustrate other AD conversion methods.

The AD conversion of Fig. 26 is carried out in a display device employing the dot-sequential drive, which is performed per a predetermined number of the data signal lines. The AD conversion is carried out during a first period, which falls within a period from (i) a time point within a period during which last output of the source outputs Vd to corresponding ones of the data signal lines is in progress for one scanning signal line selection period to (ii) a time point at which the voltage of the common electrode COM changes for the first time since the time point (i). According to Fig. 26, the AD conversion is carried out during the first period which falls within a period t3. The period t3 is from (i) a time point within a period during which output of source outputs Vd of B to corresponding ones of the data signal lines is in progress to (ii) a time point at which the voltage of the common electrode COM changes for the first time since the time point (i). The period t3 is the maximum time length that the first period can take. Here, sensor outputs Vs need to be sampled in advance during a period not overlapping the period during which the source outputs are sent out, in a case where the first period is contained within the period during which the source outputs are sent out. Further, in a case where the common electrode COM does not receive the voltage being driven, the first period can be any period as long as it falls within a period from (i) the time point within the period during which last output of the source outputs Vd to corresponding ones of the data signal lines in progress for one scanning signal line selection period to (ii) a time point

(same as Fig. 7) at which output of the source outputs of RGB to the data signal lines is initiated for a subsequent scanning signal line selection period.

The AD conversion of Fig. 27 is carried out in a display device employing the dot-sequential drive, which is performed per a predetermined number of the data signal lines. The AD conversion is carried out during a first period which falls within a period from (i) a time point within a period during which one output of the source outputs Vd to corresponding ones of the data signal lines is in progress for one scanning signal line selection period to (ii) a time point at which the one output of the source outputs Vd is completed. According to Fig. 27, the AD conversion is carried out during the first period which falls within a period t4. The period t4 is from (i) a time point within the period during which output of the source outputs Vd of G to the data signal lines is in progress to (ii) a time point at which the output of the source outputs Vd of G is completed. The period t4 is a maximum time length that the first period can take. In this case, the sensor outputs Vs need to be sampled in advance during a period not overlapping the period during which the source outputs are sent out. Alternatively, the period t4 can be contained in a period during which the data signals of R or B are sent out to the data signal lines.

The AD conversion of Fig. 28 is carried out in a display device employing the dot-sequential drive, which is performed per a predetermined number of the data signal lines. The AD conversion is carried out during a first period which falls within a period from (i) a time point within a period during which one output, other than the last output, of the source outputs Vd to corresponding ones of the data signal lines in progress for one scanning signal line selection period is to (ii) a time point at which subsequent one output of the source outputs Vd to corresponding ones of the data signal lines is initiated for the one scanning signal line selection period. Fig. 28 illustrates an exemplary case where the AD conversion is carried out during the first period which falls within a period t5. The period t5 is from (i) a time point within a period during which output of the source outputs Vd of G to corresponding ones of the data signal lines is in progress to (ii) a time point at which output of the source outputs Vd of B to the data signal lines is initiated. The period t5 is a maximum time length that the first period can take. Here, the sensor outputs Vs need to be sampled in advance during a period not overlapping the period during which the source outputs are sent out, in a case where the first period is contained in the period during which the source outputs are sent out. Further, it is possible to provide a period, such as a period N of Fig. 22, between (i) a time point at which transmission of the source outputs Vd of G from the source driver 4 is completed and (ii) a time point at which transmission of the source outputs Vd of B from the source driver 4 is initiated. No source output Vd is sent out during the period N, and thus potentials of the data signal lines are indefinite during the period N. As an alternative, the period t5 can be a period from (i) a time point within a period during which output of the source outputs Vd of R to corresponding ones of the data signal lines is in progress to (ii) a time point at which output of the source outputs Vd of G to the data signal lines is initiated.

According to the configurations of Figs. 26 through 28, it is possible to carry out the AD conversion during a period which does not overlap timings at which noise occurs. This is because there is no flow of the large electric current Ivdd at the power supplies and the GNDs after transmission of the source outputs Vd to the data signal lines is initiated. As such, it is possible to properly carry out the AD conversion of the sensor outputs.

Further, according to the configurations of Figs. 26 and 27, (i) a period during which the source outputs Vd are sent out to the data signal lines and which contains the first period is longer than (ii) other periods during which the source outputs Vd are sent out to the data signal lines and which do not contain the first period. Accordingly, it is possible to carry out the AD conversion during a period during which the electric current and voltage are more stable.

The AD conversion of Figs. 26 and 27 can apply also to a display device employing the line-sequential drive whereby to line-sequentially supply the source outputs Vd.

In a case where the AD conversion of Fig. 26 is applied to the display device employing the line-sequential drive, the AD conversion is carried out in the following manner. In a case where the common electrode COM receives the voltage being driven, the AD conversion is carried out during a first period which falls within a period from (i) a time point within a period during which output of the source outputs Vd to the data signal lines is in progress for one scanning signal line selection period to (ii) a time point at which the voltage of the common electrode COM changes for the first time since the time point (i). On the other hand, in a case where the common electrode COM does not receive the voltage being driven, the AD conversion is carried out during a first period which falls within a period from (a) a time point within a period during which output of the source outputs Vd to the data signal lines is in progress for one scanning signal line selection period to (b) a time point at which output of the source outputs of RGB to the data signal lines is initiated for a subsequent scanning signal line selection period.

In a case where the AD conversion of Fig. 27 is applied to the display device employing the line-sequential drive, the AD conversion is carried out during a first period which falls within a period from (i) a time point within a period during which output of the source outputs Vd to the data signal lines is in progress for one scanning signal line selection period to (ii) a time point at which the output of the source outputs Vd is completed.

In a case of the display device employing the dot-sequential drive which is performed per a predetermined number of the data signal lines (such as those illustrated in Figs. 7 and 8), the first period can be set so that the AD conversion of the sensor outputs is initiated after a time point at which transmission of the source outputs from the source driver 4 is completed for one scanning signal line selection period. In Fig. 7, the above time point is a time point at which the transmission of the source output of B is completed, i.e., a time point comes after a falling edge of the control pulse of the switch SSW3. Such a display device makes it possible to surely prevent the AD conversion from making an effect on the source outputs Vd sent out to the data signal lines, even if timings of falling edges of some control pulses of a plurality of switches (SSW1, SSW2, and SSW3, each of which time-divisionally and sequentially becomes conductive) delay due to waveform rounding resulting from transmission delay occurred inside the panel. This is because the control pulses have definitely fallen at a time when the transmission of the source outputs is completed.

In a case of time-divisionally driving each of the data signal lines, the data signal lines do not necessarily have to be divided into three groups as illustrated in Figs. 7, 8, 26, 27, and 28, and therefore may be divided into any number of groups. As described earlier, it is possible to carry out the driving without time division (see Fig. 9). This arrangement is suitable for use particularly in a panel with a gate monolithic driver, employing amorphous silicon TFTs, which is configured such that (i) the source driver is prepared collectively for all colors, (ii) each pixel array is made up of pixels having an identical color, and (iii) the gate driver scans each pixel array at once.

The following description discusses, with reference to Figs. 13 through 15, connections among the AD conversion circuit 45 and circuits surrounding the AD conversion circuit 45, where the sensor outputs are sampled, converted (analog-to-digital conversion), and then outputted.

Fig. 13 illustrates connections which are made during a period during which the sensor output is sampled.

A switch SW1 is equivalent to the switch section 47b of Fig. 1. In the AD conversion circuit 45, a switch SW2 and a hold condenser C1 are connected in series between (i) an input terminal, which is connected with a terminal of the switch SW1, of the AD conversion circuit 45 and (ii) an input of a comparator 45a. Provided between the input terminal and the switch SW2 is a constant current source 45x, which flows a constant electric current to a GND. Provided between the switch SW2 and the hold condenser C1 is a connection point M, which is connected with an output of the DA converter 45b via a switch SW3. A control logic 45f collectively indicating the resistor 45d and the sequence control circuit 45e of Fig. 12. Provided between the hold condenser C1 and the input of the comparator 45a is a connection point N, which is connected with a reference voltage VREF via a switch SW4.

When sampling of the sensor outputs is carried out, a buffer 47a is deactivated, whereas the switch SW1 is turned ON. Further, the switches SW2 and SW4 are turned ON, whereas the switch SW3 is turned OFF. In this way, the hold condenser C1 is charged so that it has an electrical charge corresponding to the sensor outputs. As such, the sampling of the sensor outputs is carried out.

Next, a hold period comes along as illustrated in Fig, 14. The hold switches SW1 through SW4 are turned OFF so that the hold condenser C1 holds the sensor outputs. Here, since the switch SW1 is in an OFF state, it is possible to activate the buffer 47a. Thus, it may be arranged such that after the sensor outputs is held, the AD conversion is kept waiting until the AD conversion becomes possible.

Next, an AD conversion period comes along as illustrated in Fig. 15. The switches SW1, SW2, and SW4 are kept in the OFF state, whereas the switch SW3 is turned ON. Then, the process described with reference to Fig. 12 is carried out in such a manner that (i) the switch SW3 is turned OFF, (ii) each bit is determined, and then (iii) the switch SW3 is turned ON again. The AD conversion finishes with completion of sending of the digital data. Next, sampling of the sensor outputs is carried out again under the connections of Fig. 13.

The above description dealt with an example in which the AD conversion circuit 45 includes the DA converter 45b. Note however that it is possible to provide an AD conversion circuit which carries out the AD conversion in a manner illustrated in Fig. 16, instead of using the AD conversion circuit employing the DA converter 45b. As illustrated in (a) of Fig. 16, the sensor voltage is compared with a voltage E which changes as time elapses. Then, as illustrated in (b) of Fig. 16, the digital value is determined according to a time taken by the comparator changing a Low output to a High output.

Note that in a case of the configuration in which each of a plurality of first terminals is selectively and time-divisionally connected to a corresponding AD conversion section of the AD conversion circuit (for example, see Fig. 4), the following applies. That is, sample and hold of the sensor voltage Vs, which is not under AD conversion, can be carried out via the corresponding first terminal as long as the sensor voltage Vs is not inputted into the comparator 45a.

In a case of a configuration in which each of a plurality of first terminals is selectively and time-divisionally connected to a corresponding AD conversion section of the AD conversion circuit (for example, see Fig. 4), each of plural pieces of data having been time-divisionally subjected to the AD conversion is independently stored temporarily in a storage circuit before parallel-to-serial conversion. The time-division AD conversion can be carried out in such a manner that the plural pieces of data having been inputted in chronological order are sequentially subjected to AD conversion in accordance with sequentially-received AD conversion clock signals. Alternatively, the time-division AD conversion can be carried out in such a manner that a piece of data and a subsequent piece of data are subjected to AD conversion with a certain interval therebetween.

As so far described, according to the liquid crystal display device 1 of the present embodiment, the sensor voltages Vs supplied from the display panel 2 are inputted into the AD conversion circuit 45, where the sensor voltages Vs are sampled and held. The AD conversion circuit 45 then carries out, in its incorporated AD conversion sections, AD conversion of the data (sensor voltages Vs) having been sampled and held so as to obtain parallel digital data. Thereafter, the AD conversion circuit 45 stores the parallel digital data in the storage circuit such as a flip-flop circuit. Further, the AD conversion circuit 45 carries out, in its incorporated parallel-to-serial conversion section, parallel-to-serial conversion so that the stored parallel digital data are rearranged in the form of serial data. The rearrangement is carried out in accordance with coordinates in the display panel at which the sensor voltages Vs were generated. Then, the rearranged data is processed in the data processing circuit so as to be sent out, as the sensor data, to outside.

There has been described the present embodiment. It is clear that the present invention is applicable for use in any other display device such as an EL display device or a display device employing dielectric liquid. Further, the light sensor can output another signal such as an electric current indicative of detected light intensity.

The invention is not limited to the description of the embodiments above, but may be altered within the scope of the claims. An embodiment based on a proper combination of technical means disclosed in different embodiments is encompassed in the technical scope of the invention.

As so far described, a display device drive circuit of the present invention is a display device drive circuit including: an analog-to-digital conversion circuit for converting analog signals inputted therein via respective first terminals, the first terminals serving also as output terminals via which data signals are sent out to data signal lines, the first terminals being time-divisionally used for (i) a period during which the data signals are sent out and for (ii) a period during which the analog signals are inputted, each of the first terminals being (a) connected with an input of the analog-to-digital conversion circuit via only a switching circuit and a sample hold circuit and (b) directly connected with an output terminal of a corresponding one of output circuits from which the data signals are sent out to the first terminals, and the switching circuit disconnecting the first terminal from the input of the analog-to-digital conversion circuit during the period during which the data signals are sent out, whereas, the switching circuit electrically connecting the first terminal to the inputs of the analog-to-digital conversion circuit and an output of the output circuit becoming high impedance during the period during which the analog signals are inputted.

As so far described, the above invention makes it possible to provide a display device drive circuit which provides, to a display panel which processes analog signals such as photosensor outputs, a COG technique capable of carrying out appropriate analog-to-digital conversion of such analog signals.

The embodiments discussed in the foregoing description of embodiments and concrete examples serve solely to illustrate the technical details of the present invention, which should not be narrowly interpreted within the limits of such embodiments and concrete examples, but rather may be applied in many variations within the spirit of the present invention, provided such variations do not exceed the scope of the patent claims set forth below.

### Industrial Applicability

The present invention is suitably applicable for use in particularly a display device such as a liquid crystal display device or an EL display device.

## Claims

1. A display device drive circuit, comprising:
an analog-to-digital conversion circuit for converting analog signals inputted therein via respective first terminals,
the first terminals serving also as output terminals via which data signals are sent out to data signal lines, the first terminals being time-divisionally used for (i) a period during which the data signals are sent out and for (ii) a period during which the analog signals are inputted,
each of the first terminals being (a) connected with an input of the analog-to-digital conversion circuit via only a switching circuit and a sample hold circuit and (b) directly connected with an output terminal of a corresponding one of output circuits from which the data signals are sent out to the first terminals, and
the switching circuit disconnecting the first terminal from the input of the analog-to-digital conversion circuit during the period during which the data signals are sent out, whereas, the switching circuit electrically connecting the first terminal to the inputs of the analog-to-digital conversion circuit and an output of the output circuit becoming high impedance during the period during which the analog signals are inputted.

2. The display device drive circuit according to claim 1, wherein the first terminals are terminals into which the analog signals are inputted, which analog signals are sensor outputs indicative of light intensity detected by photosensors included in respective display regions of a display panel.

3. The display device drive circuit according to claim 1 or 2, wherein the analog-to-digital conversion circuit includes an analog-to-digital conversion section for each first terminal.

4. The display device drive circuit according to claim 1 or 2, wherein:
the analog-to-digital conversion circuit includes a plurality of analog-to-digital conversion sections so that each of the plurality of analog-to-digital conversion sections is shared by corresponding ones of the first terminals, and
the switching circuit selectively connects (i) corresponding ones of the first terminals to (ii) an input of corresponding one of the plurality of analog-to-digital conversion sections.

5. The display device drive circuit according to claim 3 or 4, further comprising second terminals which are not for receiving the analog signals but for sending out the data signals to the respective data signal lines.

6. A display device, comprising a display device drive circuit as set forth in any one of claims 1 through 5.

7. The display device according to claim 6, wherein the display device drive circuit is mounted on a display panel by a COG method.

8. The display device according to claim 6 or 7, wherein:
the photosensors are included in the respective display regions of the display panel, and
the sensor outputs indicative of the light intensity detected by the photosensors, which sensor outputs are the analog signals, are inputted into the first terminals.

9. The display device according to claim 8, wherein:
the data signal lines are divided into a plurality of groups, each of which includes a plurality of the data signal lines,
the data signal lines in one group are time-divisionally and individually connected to corresponding one of the first terminals, and
any one of the data signal lines in one group is used for transmitting the sensor outputs to the corresponding one of the first terminals.

10. The display device according to claim 8, wherein:
each of the first terminals is connected to corresponding one of the data signal lines, and
the corresponding one of the data signal lines is used for transmitting the sensor outputs to corresponding one of the first terminals.
